# EUROPEAN PATENT SPECIFICATION

(11) **EP 4 468 751 B1**
(45) Date of publication and mention of the grant of the patent: **08.04.2026**
(21) Application number: 23752270.1
(22) Date of filing: 01.02.2023
(51) Int. Cl.: H04L 61/4511, H04W 4/02

(54) **METHOD AND APPARATUS FOR DISCOVERING EDGE SERVICE**
VERFAHREN UND VORRICHTUNG ZUR ERKENNUNG EINES EDGE-DIENSTES
PROCÉDÉ ET APPAREIL DE DÉCOUVERTE DE SERVICE PÉRIPHÉRIQUE

(30) Priority: 14.02.2022 CN 202210135574
(43) Date of publication of application: 27.11.2024
(60) Divisional application: 26158686.1
(73) Proprietor: Huawei Technologies Co., Ltd., Shenzhen, Guangdong 518129 (CN)
(72) Inventor: WEI, Xinpeng, Shenzhen, Guangdong 518129 (CN); ZHU, Fenqin, Shenzhen, Guangdong 518129 (CN)
(74) Representative: Körber, Martin Hans
(86) International application number: PCT/CN2023/074060
(87) International publication number: WO 2023/151490

(56) References cited:
- EP-A1- 4 362 512
- CN-A- 113 132 897
- CN-A- 113 573 303
- CN-A- 113 691 969
- US-A1- 2022 030 063
- SHUBHRANSHU SINGH ET AL: "Influencing UPF and EAS (re)location for collections of UEs", vol. SA WG2, no. Toulouse, FR; 20221114 - 20221118, 4 November 2022 (2022-11-04), XP052224983, Retrieved from the Internet <URL:https://www.3gpp.org/ftp/tsg_sa/WG2_Arch/TSGS2_154_Toulouse_2022-11/Docs/S2-2210916.zip S2-2210916.docx> [retrieved on 20221104]
- SHUBHRANSHU SINGH ET AL: "Solution #37 Updates", vol. SA WG2, no. Online; 20220817 - 20220826, 30 August 2022 (2022-08-30), XP052207090, Retrieved from the Internet <URL:https://www.3gpp.org/ftp/tsg_sa/WG2_Arch/TSGS2_152E_Electronic_2022-08/Docs/S2-2207748.zip S2-2207748.docx> [retrieved on 20220830]
- TUGCE ERKILIC CIVELEK ET AL: "KI#4: AF traffic influence for common EAS, DNAI selection", vol. SA WG2, no. Online; 20230116 - 20230120, 24 January 2023 (2023-01-24), XP052233918, Retrieved from the Internet <URL:https://www.3gpp.org/ftp/tsg_sa/WG2_Arch/TSGS2_154AHE_Electronic_2023-01/Docs/S2-2301411.zip S2-2301411 was S2-2300176r04.docx> [retrieved on 20230124]
- HUAWEI ET AL: "New SID on Enhancement of support for Edge Computing in 5G Core network - phase 2", vol. TSG SA, no. Electronic meeting; 20211214 - 20211220, 20 December 2021 (2021-12-20), XP052089006, Retrieved from the Internet <URL:https://ftp.3gpp.org/tsg_sa/TSG_SA/TSGS_94E_Electronic_2021_12/Docs/SP-211638.zip SP-211638_was_SP-211601_was_SP-211316_rev3_rm.docx> [retrieved on 20211220]
- HUAWEI, HISILICON: "Discovery of Edge Application Server based on AF Influence in Support of Edge Relocation", 3GPP DRAFT; S2-2000653, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Incheon, South Korea; 20200113 - 20200117, 7 January 2020 (2020-01-07), Mobile Competence Centre ; 650, route des Lucioles ; F-06921 Sophia-Antipolis Cedex ; France , XP051842711

## Description

### TECHNICAL FIELD

Embodiments of this application relate to the communication field, and more specifically, to a method and an apparatus for discovering an edge service.

### BACKGROUND

In a 5th generation (5th generation, 5G) communication system, to use an edge service, a terminal device needs to obtain an edge application server (edge application server, EAS) address by using a domain name system (domain name system, DNS)-based service discovery mechanism. For example, when accessing a service, the terminal device first initiates a DNS query request to an edge application server discovery function (edge application server discovery function, EASDF) network element; the EASDF network element reports, according to an indication of a session management function (session manage function, SMF) network element, information related to the DNS query request to the SMF network element; the SMF network element provides, for the EASDF network element, client subnet (EDNS client subnet, ECS) option (ECS option) information of a DNS extension mechanism corresponding to the DNS query request; the EASDF network element adds the ECS option information to the DNS query request; and a DNS server (DNS server) performs query based on the ECS option information and returns the corresponding EAS address.

Currently, the method can provide an edge application discovery service only for a single terminal device, but the method cannot meet low-latency requirements of a plurality of terminal devices accessing a same service, for example, a plurality of terminal devices in an interactive augmented reality (augmented reality, AR) game. CN 113691969 A discloses technology for discovering an edge application server. HUAWEI ET AL: "New SID on Enhancement of support for Edge Computing in 5G Core network - phase 2", 3GPP DRAFT; SP-211638, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE discloses technology related to edge computing in a 5G core network.

### SUMMARY

Embodiments of this application provide a method and an apparatus for discovering an edge service, so that a plurality of terminal devices accessing a specific service can be connected to a same EAS or an EAS in a same edge network, thereby reducing an interaction delay between the plurality of terminal devices. The present invention is defined by the enclosed claims.

### BRIEF DESCRIPTION OF DRAWINGS

FIG. 1 is a diagram of a system architecture to which embodiments of this application are applicable;
FIG. 2A and FIG. 2B are a schematic interaction diagram of an existing method for discovering an edge service;
FIG. 3 is a schematic interaction diagram of a method for discovering an edge service according to an embodiment of this application;
FIG. 4 is a schematic interaction diagram of another method for discovering an edge service according to an embodiment of this application;
FIG. 5A and FIG. 5B are a schematic interaction diagram of still another method for discovering an edge service according to an embodiment of this application;
FIG. 6A and FIG. 6B are a schematic interaction diagram of yet another method for discovering an edge service not falling under the scope of the claims.
FIG. 7A to FIG. 7C are a schematic interaction diagram of still yet another method for discovering an edge service not falling under the scope of the claims.
FIG. 8A and FIG. 8B are a schematic interaction diagram of a further method for discovering an edge service not falling under the scope of the claims.
FIG. 9A and FIG. 9B are a schematic interaction diagram of a still further method for discovering an edge service not falling under the scope of the claims.
FIG. 10A to FIG. 10C are a schematic interaction diagram of a yet further method for discovering an edge service not falling under the scope of the claims.
FIG. 11A to FIG. 11C are a schematic interaction diagram of a still yet further method for discovering an edge service not falling under the scope of the claims.
FIG. 12 is a schematic interaction diagram of a method for rediscovering an edge service not falling under the scope of the claims.
FIG. 13 is a block diagram of an apparatus for discovering an edge service not falling under the scope of the claims; and
FIG. 14 is a block diagram of another apparatus for discovering an edge service

### DESCRIPTION OF EMBODIMENTS

The following describes technical solutions of embodiments in this application with reference to accompanying drawings.

The technical solutions in embodiments of this application are applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th Generation, 5G) system or a future 6th generation (6th Generation, 6G) system.

A terminal device in embodiments of this application may be referred to as user equipment, an access terminal, a subscriber unit, a subscriber station, a mobile station, a remote station, a remote terminal, a mobile device, a user terminal, a terminal, a wireless communication device, a user agent, a user apparatus, or the like. Further, the terminal device may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, or a terminal device in communication networks such as a public land mobile network (public land mobile network, PLMN), a 5G network, or a further 6G. This is not limited in embodiments of this application.

A network device in embodiments of this application may be a device configured to communicate with the terminal device. The network device may be a base transceiver station (base transceiver station, BTS) in a global system for mobile communications (global system for mobile communications, GSM) or a code division multiple access (code division multiple access, CDMA) system, or may be a NodeB (NodeB, NB) in a wideband code division multiple access (wideband code division multiple access, WCDMA) system, or may be an evolved NodeB (evolved NodeB, eNB or eNodeB) in an LTE system, or may be a radio controller in a scenario of a cloud radio access network (cloud radio access network, CRAN). Alternatively, the network device may be a relay station, an access point, a vehicle-mounted device, a wearable device, or a network device in communication networks such as a PLMN network, a 5G network, or a future 6G. This is not limited in embodiments of this application.

In this application, "being used to indicate" may include "being used to directly indicate" and "being used to indirectly indicate". When a piece of indication information is described as being used to indicate A, the indication information may directly indicate A or indirectly indicate A, but it does not necessarily indicate that the indication information carries A. In embodiments of this application, descriptions such as "when...", "in a case of...", and "if" all mean that the device performs corresponding processing in an objective case, and are not limited to time, and the device is not required to perform a determining action during implementation. This does not mean that there is another limitation.

In embodiments of this application, unless otherwise specified, a quantity of nouns indicates "a singular noun or a plural noun", namely, "one or more". "At least one" means one or more, "a plurality of" means two or more, and "a plurality of" in "one or more" means two or more similar types. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof refers to any combination of these items, including any combination of singular items (pieces) or plural items (pieces). For example, at least one item (piece) of a, b, or c may represent: a, b, c, a-b, a-c, b-c, or a-b-c, where a, b, and c may be singular or plural.

Edge computing (edge computing, EC) is a new network architecture. In the edge computing network architecture, computing resources are deployed on an edge side near users to provide nearest services. An application is initiated on the edge side. This can reduce a network transmission delay between a user and computing, and generate a faster network service response.

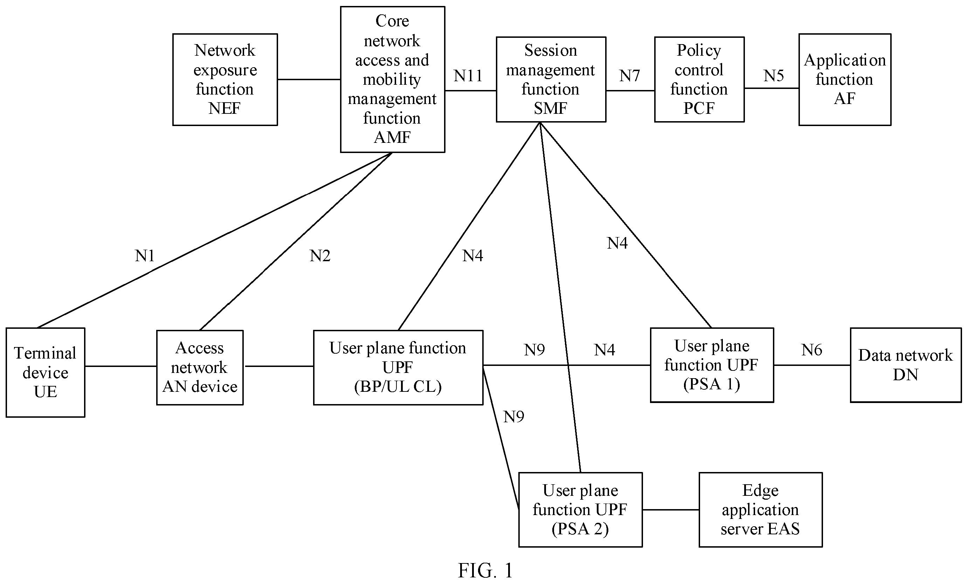

FIG. 1 is a schematic block diagram of an architecture of a communication system to which this application is applicable. As shown in FIG. 1, the following separately describes components in the network architecture.

A terminal device (terminal equipment) is an ingress for a mobile user to interact with a network, and can provide a basic computing capability and storage capability, display a service window to the user, and accept an operation input of the user. The terminal device may include various handheld devices, vehicle-mounted devices, wearable devices, computing devices that have a wireless communication function, or other processing devices connected to a wireless modem, and terminals in various forms, such as a mobile station (mobile station, MS), a terminal (terminal), user equipment (user equipment, UE), and a software terminal. For example, the terminal device is a mobile phone, a water meter, an electricity meter, or a sensor.

A (radio) access network (radio access network, (R)AN) element is configured to provide a network access function for authorized terminal devices in a specific area, and can use transmission tunnels with different quality based on levels, service requirements, and the like of the terminal devices.

The (R)AN element can manage radio resources and provide an access service for the terminal device, to forward a control signal and terminal device data between the terminal device and a core network. The (R)AN element may also be understood as a base station in a conventional network.

A user plane function (user plane function, UPF) network element is used for packet routing and forwarding, quality of service (quality of service, QoS) processing of user plane data, and the like.

In a future communication system, a user plane network element may still be the UPF network element, or may have another name. This is not limited in this application.

A data network (data network, DN) is a data network that provides a service for a user. Generally, a client is located in UE, and a server is located in the data network. The data network may be a private network, for example, a local area network, an external network that is not managed and controlled by an operator, for example, the internet, or a dedicated network jointly deployed by operators, for example, a network that provides an IMS service.

In the future communication system, the DN in a 5G communication system may be used, or an entity with a similar function may be replaced with another name. This is not limited in this application.

An access and mobility management function (access and mobility management function, AMF) network element is mainly used for mobility management, access management, and the like, and may be configured to implement a function in a mobility management entity (mobility management entity, MME) function other than session management, for example, an access authorization/authentication function.

In the future communication system, an access management network element may still be the AMF network element, or may have another name. This is not limited in this application.

A session management function (session management function, SMF) network element is mainly configured to perform session management, internet protocol (internet protocol, IP) address allocation and management of the terminal device, selection of an endpoint that can manage a user plane function and a policy control and charging function interface, downlink data notification, and the like.

In the future communication system, a session management function network element may still be the SMF network element, or may have another name. This is not limited in this application.

A network exposure function (network exposure function, NEF) network element is configured to expose a network capability to a third-party application, to implement friendly interconnection between the network capability and a service requirement.

In the future communication system, a network exposure network element may still be the NEF network element, or may have another name. This is not limited in this application.

A network repository (network repository) network element is configured to maintain real-time information of all network function services in a network.

In a 5G communication system, the network repository network element may be a network registration function (network repository function, NRF) network element. In the future communication system, a network repository network element may still be the NRF network element, or may have another name. This is not limited in this application.

A policy control function (policy control function, PCF) network element is a unified policy framework for instructing network behavior, and provides policy rule information and the like for control plane function network elements (such as the AMF and SMF network elements).

In the future communication system, a policy control network element may still be the PCF network element, or may have another name. This is not limited in this application.

A data management (data management) network element is configured to process a terminal device identifier, perform access authentication, registration, and mobility management, and the like.

In the 5G communication system, the data management network element may be a unified data management (unified data management, UDM) network element. In the future communication system, unified data management may still be the UDM network element, or may have another name. This is not limited in this application.

An application function (application function, AF) network element is configured to route data affected by an application, access a network, and interact with a policy framework for policy control.

In the future communication system, an application network element may still be the AF network element, or may have another name. This is not limited in this application.

An edge application server (edge application server, EAS) is an edge application server deployed in an edge data network (edge data network, EDN), and may also be referred to as an edge application (server), an application server, an application instance, an edge application instance, a multi-access edge computing (multi-access edge computing, MEC) application (server), an EAS function, or the like. The edge application may also be referred to as an "application instance", and is specifically an instance (instance) of a server application (for example, social media software, augmented reality (augmented reality, AR), or virtual reality (virtual reality, VR)) that is deployed and runs in the EDN. The EDN may be a local data network (local data network, LDN), and each LDN may be identified by a corresponding data network access identifier (data network access identifier, DNAI) or data network name (data network name, DNN). A network selects a UPF closest to the LDN to establish a transmission path for the UE, to ensure that the UE can normally access an edge service.

An edge application server discovery function (edge application server discovery function, EASDF) network element is mainly responsible for discovering the EAS, including functions such as registering with the NRF for discovery and selection, processing a DNS message according to an indication of the SMF (for example, receiving a DNS message processing rule sent by the SMF, sending a DNS message to a local DNS server or a central DNS server, adding an ECS option to a DNS query message, exchanging the DNS message sent by the UE, and notifying the SMF of EASDF-related information), and terminating DNS security.

It may be understood that the foregoing network elements or functions may be network elements in a hardware device, software functions running on dedicated hardware, or virtualized functions instantiated on a platform (for example, a cloud platform). One or more services may be obtained through division into the network elements or the functions. Further, services that exist independently of network functions may occur.

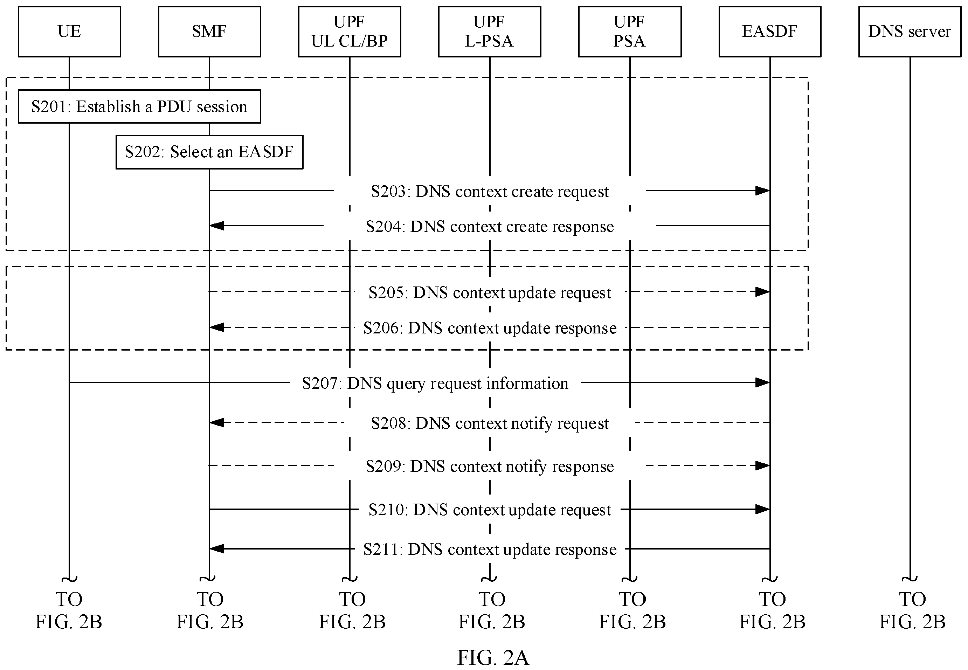

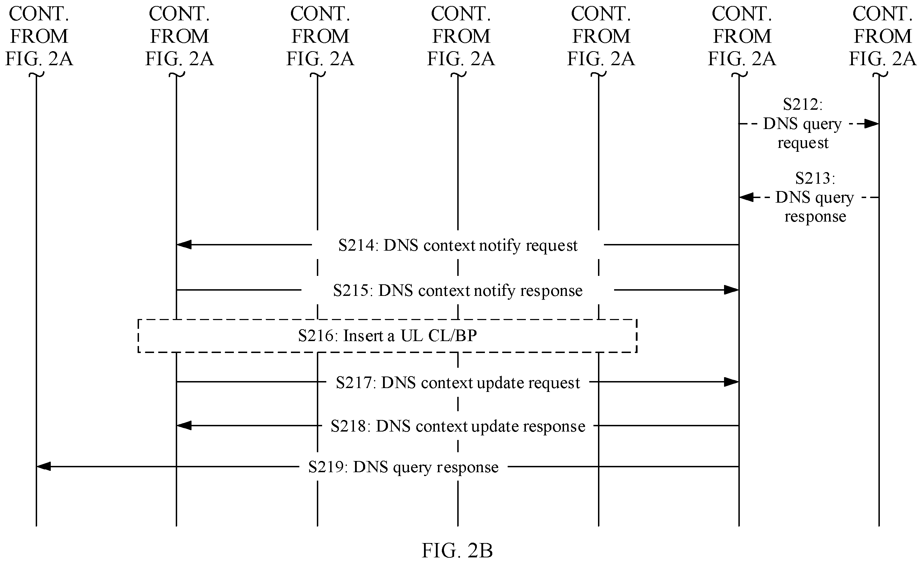

The following describes, with reference to FIG. 2A and FIG. 2B, an existing method for discovering an edge computing service.

S201: Establish a PDU session process.

A session of a user plane path between UE and a UPF is established.

S202: An SMF network element selects an EASDF network element.

S203: The SMF network element sends a DNS context create request (Neasdf_DNSContext_Create Request) to the selected EASDF network element.

S204: The EASDF network element sends a DNS context create response (Neasdf_DNSContext_Create Response) to the SMF network element.

S205: The SMF network element sends a DNS context update request (Neasdf_DNSContext_Update Request) to the EASDF network element.

S206: The EASDF network element sends a DNS context update response (Neasdf_DNSContext_Update Response) to the SMF network element.

S207: The UE sends a DNS query (DNS query) request to the EASDF network element.

S208: The EASDF network element sends a DNS context notify request (Neasdf_DNSContext_Notify Request) to the SMF network element.

S209: The SMF network element sends a DNS context notify response (Neasdf_DNSContext_Notify Response) to the EASDF network element.

S210: The SMF network element sends a DNS context update request (Neasdf_DNSContext_Update Request) to the EASDF network element.

Optionally, the update request includes ECS option information constructed by the SMF network element, and the ECS option information includes an internet protocol (internet protocol, IP) address of a user access network, so that a DNS server selects, based on the IP address, an address of a server closer to a user, and the user can access a service nearby.

S211: The EASDF network element sends a DNS context update response (Neasdf_DNSContext_Update Response) to the SMF network element.

S212: The EASDF network element sends a DNS query request to the DNS server.

S213: The DNS server sends a DNS query response (DNS response) to the EASDF network element.

S214: The EASDF network element sends a DNS context notify request (Neasdf_DNSContext_Notify Request) to the SMF network element.

S215: The SMF network element sends a DNS context notify response (Neasdf_DNSContext_Notify Response) to the EASDF network element.

S216: The SMF network element inserts an uplink classifier (uplink classifier, UL CL) and an L-PSA.

S217: The SMF network element sends a DNS context update request (Neasdf_DNSContext_Notify Request) to the EASDF network element.

S218: The EASDF network element sends a DNS context update response (Neasdf_DNSContext_Notify Response) to the SMF network element.

S219: The EASDF network element sends a DNS query response to the UE.

The DNS query response includes an EAS address.

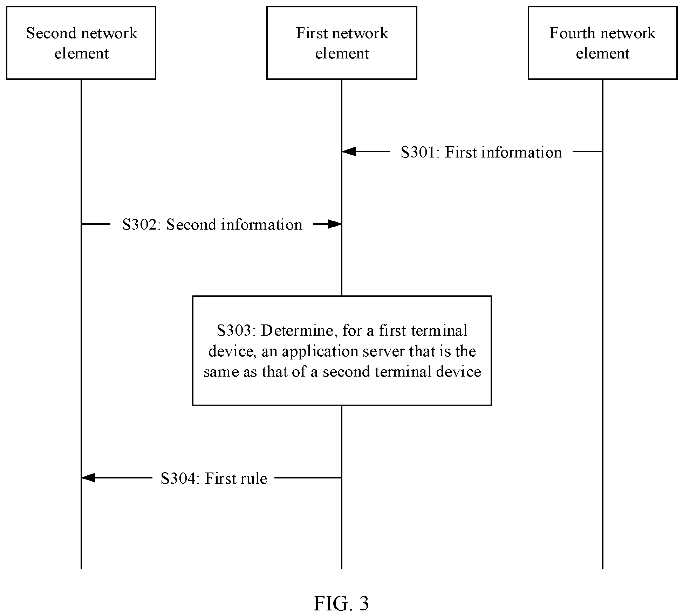

The discovery method described in FIG. 2A and FIG. 2B is applicable only to edge service discovery of single UE, and cannot be applicable to an edge service discovery process of multiple UE that uses a same service. FIG. 3 is a schematic interaction diagram of a method for discovering an edge service according to an embodiment of this application. A first network element determines a same application server address for terminal devices in a same terminal group.

In this application, terminal devices accessing a same application server, terminal devices accessing a same service, or terminal devices that access a same application server corresponding to a same service may be referred to as a terminal group, or may be referred to as a terminal set, a terminal device group, a terminal device set, or a UE group. It may be understood that the terminal group may be a real group, and the terminal group includes at least one terminal device, for example, all terminal devices in the terminal group access a same service; or the terminal group may be a virtual group, that is, the terminal group herein refers to one or more terminal devices accessing a same service, and a real group does not exist, but because the one or more terminal devices all access the same service, the terminal devices are considered as the terminal group.

S301: The first network element receives first information, and correspondingly, a fourth network element sends the first information, where the first information includes first service information.

In this application, the first network element may be an SMF network element, the fourth network element may be a PCF network element, and a second network element may be an EASDF network.

In this application, a service may also be referred to as an application, an application service, or the like. Correspondingly, service information may also be referred to as application information, application service information, or the like. This is not limited in this application.

Optionally, the service information may be a full qualified domain name (full qualified domain name, FQDN), or may be an application identifier (application ID), or an internet protocol (internet protocol, IP) 5-tuple, namely, a source IP address, a source port, a destination IP address, a destination port, and a transport layer protocol. This is not limited in this application.

In a possible implementation, the first information may further include first identification information. The first identification information indicates a terminal device that accesses a same application server as a first terminal device, which may also be understood as that the first identification information indicates terminal devices that access a same application server, that is, terminal devices that access a same application server correspond to a same first identifier; or understood as that terminal devices that access a same application server corresponding to a same service correspond to a same first identifier; or understood as that each terminal device in the terminal group corresponds to the identifier. The fourth network element may set an identifier for the terminal group, that is, each terminal device in the terminal group corresponds to the identifier. The terminal devices corresponding to the same first identification information need to use the same application server when accessing the same service.

Optionally, the application server may be an edge application server, and the application server address may be an edge application server address.

Optionally, the first identification information may be the ID of the terminal group, or may be a list of the terminal devices. This is not limited in this application.

Optionally, terminal devices in a same location area need to use the same application server when accessing the same service. The location area may be a city area or a geographical shape in a geographical area, or may be a specific longitude and latitude range. For example, in a range from 31°15" to 31°21" north latitude and from 118°22" to 118°26" east longitude, the terminal devices accessing the same service should be connected to the same application server. This is not limited in this application.

In a possible implementation, the first information may further include first indication information. The first indication information indicates to determine the same application server for the terminal devices, which may also be understood as that the first indication information indicates to determine the same application server for the terminal devices accessing the same service, or may be understood that the first indication information indicates to determine the same application server for the terminal devices, or may be understood that the first indication information indicates to determine the same application server for the terminal devices that access the same service and that correspond to the same first identification information, or may be understood as that the first indication information indicates to determine the same application server for the terminal devices that access the service corresponding to the first service information.

Optionally, the first indication information may be implicitly carried in the first information. For example, a message name is used to implicitly indicate that the same application server is determined for the terminal devices that access the same service.

In a possible implementation, the first information may further include first application server address information, and the first network element may select the application server address for each terminal device in the terminal group.

Optionally, the first service information, the first identification information, the first indication information, and the first application server address information may not be included in the first information for sending together, and may be separately sent by the fourth network element. This is not limited in this application.

S302: The first network element receives second information, and correspondingly, the second network element sends the second information, where the second information includes first domain name information, the first domain name information is included in first domain name system DNS query request information sent by the first terminal device, and the first DNS query request information is used to request application server address information corresponding to the first domain name information.

That the first domain name information is included in the first domain name system DNS query request information sent by the first terminal device is that the first domain name information is domain name information carried in the first DNS query request information sent by the first terminal device.

In a possible implementation, the first terminal device sends the first DNS query request information to the second network element, where the first DNS query request information includes the first domain name information, and the second network element sends the second information including the first domain name information to the first network element.

Optionally, the first domain name information may be an FQDN of a service accessed by the first terminal device.

S303: When the first domain name information corresponds to the first service information, the first network element determines, for the first terminal device, an application server that is the same as that of a second terminal device, where the second terminal device and the first terminal device access a same service.

Optionally, that the first domain name information corresponds to the first service information may be that the first service information includes the first domain name information. For example, the first domain name information includes an FQDN 1, and the first service information may include the FQDN 1, an FQDN 2, and the like. In this case, the first domain name information corresponds to the first service information.

Optionally, that the first domain name information corresponds to the first service information may be that the first service information is the first domain name information. For example, if the first domain name information is an FQDN 1, the first service information is the FQDN 1. In this case, the first domain name information corresponds to the first service information.

Optionally, that the first domain name information corresponds to the first service information may be that a service corresponding to the first domain name information belongs to a service included in the first service information. For example, the first domain name information includes an FQDN 1, the FQDN 1 is a domain name of a service 1, the first service information includes an application ID-1 and an application ID-2, and the application ID-1 is an ID of the service 1. In this case, the first domain name information corresponds to the first service information.

In a possible implementation, the first network element determines, for the first terminal device based on the first identification information, the application server that is the same as that of the second terminal device, where the first terminal device and the second terminal device correspond to the first identification information. That is, the first terminal device and the second terminal device correspond to the same first identification information, or the first network element may determine a same application server for terminal devices corresponding to the first identification information. In a possible implementation, the first network element determines, for the first terminal device based on the first indication information, the application server that is the same as that of the second terminal device.

That the first network element determines, for the first terminal device based on the first indication information, the application server that is the same as that of the second terminal device may be that the first network element determines, based on the first indication information, the same application server for the terminal devices, or the first network element determines, based on the first indication information, the same application server for the terminal devices accessing the same service, or the first network element determines, based on the first indication information, the same application server for the terminal devices that access the same service and that correspond to the same identification information, or the first network element determines, based on the first indication information, the same application server for the terminal devices that access the service corresponding to the first service information.

The second terminal device and the first terminal device belong to the same terminal group, and the second terminal device may be one or more terminal devices.

S304: The first network element sends a first rule, and correspondingly, the second network element receives the first rule, where the first rule includes the first application server address information, the first application server address information indicates the same application server, and the first rule indicates the second network element to send the first application server address information to the first terminal device, that is, the second network element sends the first application server address information to the first terminal device according to the first rule.

That the first application server address information indicates the same application server may be that the first application server address information is an address corresponding to the same application server, or that the first application server address information indicates an address corresponding to the same application server.

In a possible implementation, the first application server address information is included in the first information sent by the fourth network element to the first network element, and the first network element directly selects the address for each terminal device in the terminal group.

In a possible implementation, the first network element stores the first application server address information, and provides the first application server address information for each terminal device in the terminal group.

In a possible implementation, a third network element stores the first application server address information, and provides the first application server address information to the first network element.

In this application, the third network element may be a unified data repository (unified data repository, UDR) function network element, a UDM network element, or another network element. This is not limited herein.

Optionally, before the first network element sends the first rule, the method further includes: The first network element receives fourth information, and correspondingly, the third network element sends the fourth information, where the fourth information includes the first application server address information, and the third network element may actively send the first application server address information to the first network element.

Optionally, before the first network element receives the fourth information, the method further includes: The first network element sends fifth information, where the fifth information is used to obtain the application server address information corresponding to the first domain name information, and the third network element sends the first application server address information after receiving a request, of obtaining the application server address information, from the first network element.

That the fifth information is used to obtain the application server address information corresponding to the first domain name information may also be that the fifth information is used to obtain application server address information corresponding to a terminal device that accesses the first domain name information, or the fifth information is used to obtain application server address information corresponding to a terminal device group that accesses the first domain name information.

In a possible implementation, if neither the third network element nor the first network element stores the first application server address information, a DNS message is used to query the application server address corresponding to the terminal group.

The first network element sends a second rule, and correspondingly, the second network element receives the second rule, where the second rule includes first option information, and the first option information is used by a DNS server to determine application server address information. More specifically, the DNS server determines the application server address information based on a first option corresponding to the first option information, namely, a first ECS option. The second rule indicates the second network element to send second DNS query request information to the DNS server, and the second network element sends the second DNS query request information to the DNS server according to the second rule, where the second DNS query request information includes the first option information and the first domain name information. More specifically, the second DNS query request information includes the first domain name information and the first ECS option generated based on the first option information. The first option information includes location information of the terminal device, for example, IP address information, IP address information of UE for accessing a network, or UE IP address information. The DNS server obtains one or more corresponding application server addresses through querying based on the first domain name information and the first option information. More specifically, the DNS server obtains the one or more corresponding application server addresses through querying based on the first domain name information and the first ECS option corresponding to the first option information, and sends the addresses to the second network element. The second network element sends third information to the first network element, and correspondingly, the first network element receives the third information, where the third information includes the first domain name information and the one or more pieces of application server address information.

In this application, the first option information may be first ECS option information, and the second option information may be second ECS option information.

In a possible implementation, the terminal devices in the terminal group are connected to the same first network element, and the first network element determines one piece of application server address information, namely, the first application server address information, for the terminal device from the one or more pieces of application server address information, and provides the first application server address information for the terminal devices in the terminal group.

In a possible implementation, the terminal devices in the terminal group are connected to different first network elements. The first network element determines one piece of application server address information, namely, second application server address information, for the terminal device from the one or more pieces of application server address information, and sends first request information; and correspondingly, the third network element receives the first request information, where the first request information includes the second application server address information.

In a possible implementation, the first network element receives first response information responding to the first request information, and correspondingly, the third network element sends the first response information, where the first response information includes the first application server address information. When there are a plurality of first network elements, the first network elements may select different application server addresses from the application server address information obtained by the DNS server through querying, and the third network element performs coordination, so that the first network elements select the same application server for the terminal devices in the terminal group.

Optionally, the second application server address information and the first application server address information correspond to the same application server. When there are a plurality of first network elements, the first network elements may select the same application server addresses from the application server address information obtained by the DNS server through querying. That is, a second application server address is a first application server address. That the third network element sends the first application server address information to the first network element is equivalent to that the third network element determines that application server addresses determined by the first network element for the terminal devices in the terminal group are the same.

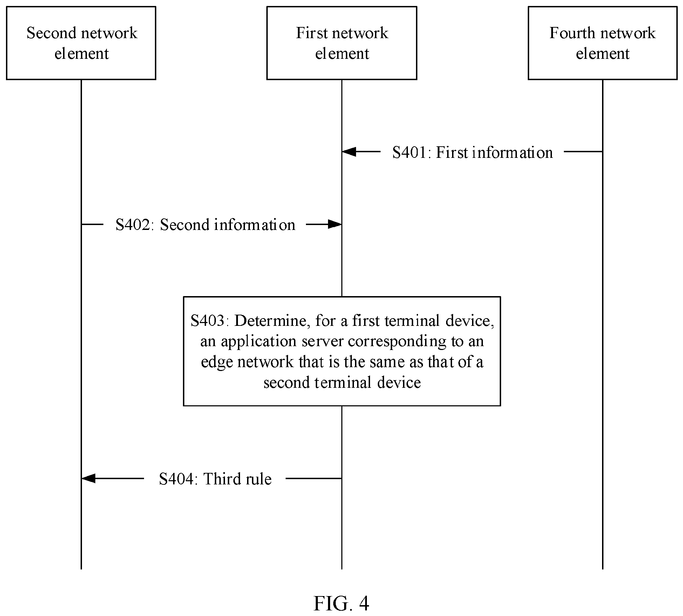

When the plurality of terminal devices access the same service, connecting the terminal devices to the same application server can reduce an interaction delay between the plurality of terminal devices. In addition, connecting the terminal devices to an application server in a same edge network can also reduce an interaction delay. FIG. 4 is a schematic interaction diagram of another method for discovering an edge service according to an embodiment of this application. A first network element determines an application server address in a same edge network for terminal devices in a same terminal group.

In this application, terminal devices that access an application server in the same edge network corresponding to a same service, or terminal devices that access an application server in the same edge network, or terminal devices accessing a same service may be referred to as a terminal group, or may have another name such as a terminal set, a terminal device group, a terminal device set, or a UE group. This is not limited in this application. Similarly, the terminal group may be a real group, or may be a virtual group. For example, all terminal devices in the terminal group access a same service. The terminal group may be a virtual group, that is, the terminal group herein refers to one or more terminal devices accessing a same service, and a real group does not exist, but because the one or more terminal devices all access the same service, the terminal devices are considered as the terminal group.

In this application, an application server in a same edge network may be understood as an application server corresponding to a same edge network, or may be understood as an application server associated with a same data network access identifier DNAI, or an application server corresponding to a same DNAI, or an application server in an edge network corresponding to a same DNAI; or may be understood as an application server associated with a same LDN, or an application server corresponding to a same LDN, or an application server in an edge network corresponding to a same LDN. Similarly, an application server address in a same edge network may be an application server address associated with a same DNAI, or an application server address corresponding to a same DNAI, or an application server address in an edge network corresponding to a same DNAI, or an application server address associated with a same LDN, or an application server address corresponding to a same LDN, or an application server address in an edge network corresponding to a same LDN; or understood as an application server address corresponding to a same edge network.

In this application, the edge network may be an edge network corresponding to a data network access identifier, or an edge part of a data network, or a local network, or an edge part of a data network, or a local part of a data network, or an edge part of a data network corresponding to a data network access identifier; or may be a data network access identifier. The same edge network may also be a same data network access identifier. Edge network information may be a name of the edge network, or may be data network access identifier information. Determining the edge network for the terminal device may also be determining the data network access identifier information for the terminal device. A determined edge network may also be determined data network access identifier information, or may be an edge network corresponding to the determined data network access identifier information.

S401: The first network element receives first information, and correspondingly, a fourth network element sends the first information, where the first information includes first service information.

In a possible implementation, the first information may further include third identification information. The third identification information indicates a terminal device that accesses an application server in an edge network that is the same as that of a first terminal device, which may also be understood as that the third identification information indicates terminal devices that access an application server in a same edge network, that is, terminal devices that access the application server in the same edge network correspond to the same third identification information; or understood as that terminal devices that access an application server in a same edge network corresponding to a same service correspond to the same third identification information; or understood as that each terminal device in the terminal group corresponds to the third identification information. The terminal devices corresponding to the same third identification information need to use the same application server when accessing the same service.

In a possible implementation, the first information may further include second indication information. That the second indication information indicates to determine the application server in the same edge network for the terminal devices that access the same service may also be understood as that the second indication information indicates to determine the application server in the same edge network for the terminal devices, or may be understood as that the second indication information indicates to determine the application server in the same edge network for the terminal devices that access the same service and that correspond to the same third identification information, or may be understood as that the second indication information indicates to determine the application server in the same edge network for the terminal devices that access a service corresponding to the first service information.

In a possible implementation, the first information may further include second identification information and/or second option information, where the second identification information indicates the same edge network accessed by the terminal group, or the second identification information is a data network access identifier, and the second option information is used to determine an application server corresponding to a same data network access identifier for the terminal devices accessing the same service, which may also be understood as that the second option information is used to determine the application server in the same edge network for the terminal devices that access the same service.

In a possible implementation, the first information may further include a first name and/or second option information, where the first name indicates a same edge network accessed by the terminal group, or the first name is a name of a local data network.

S402: The first network element receives second information, and correspondingly, a second network element sends the second information, where the second information includes first domain name information, and the first domain name information is included in first domain name system DNS query request information sent by the first terminal device, that is, the first domain name information is domain name information queried by the first terminal device by using the first domain name system DNS query request information, and the first DNS query request information is used to request application server address information corresponding to the first domain name information.

Content in this step is similar to content described in step S302. To avoid repetition, details are not described herein again.

S403: When the first domain name information corresponds to the first service information, the first network element determines, for the first terminal device, an edge network that is the same as that of a second terminal device, where the second terminal device and the first terminal device access a same service.

In a possible implementation, the first network element determines, for the first terminal device based on the third identification information, the application server in the edge network that is the same as that of the second terminal device, where the first terminal device and the second terminal device correspond to the third identification information, or the first network element may determine the application server in the same edge network for all terminal devices corresponding to the third identification information.

That the first network element determines, for the first terminal device based on the second indication information, the application server in the edge network that is the same as that of the second terminal device may be that the first network element determines, based on the second indication information, the application server in the same edge network for the terminal devices, or the first network element determines, based on the second indication information, the application server in the same edge network for the terminal devices accessing the same service, or the first network element determines, based on the second indication information, the application server in the same edge network for the terminal devices that access the same service and that correspond to the same identification information, or the first network element determines, based on the second indication information, the application server in the same edge network for the terminal devices that access the service corresponding to the first service information.

For understanding of content about a case in which the first domain name information corresponds to the first service information, refer to step S303.

S404: The first network element sends a third rule, and correspondingly, the second network element receives the third rule, where the third rule includes second option information, and the second option information is used by a DNS server to determine application server address information.

In a possible implementation, the second option information is determined by the first network element based on second identification information, where the second identification information indicates the same edge network; or the second option information is determined by the first network element based on a first name, where the first name indicates the same edge network.

The first network element first determines the same edge network for all the terminal devices in the terminal group, which may be understood as determining a same data network access identifier or local data network name for all the terminal devices in the terminal group, that is, determining the second identification information or the first name, and selecting the second option information corresponding to the second identification information or the first name. The second option information is related to location information of the terminal device. For example, the second option information includes IP address information, or UE IP address information, or IP address information of a network accessed by UE. The first network element sends the third rule including the second option information to the second network element, and the second network element sends the second option information and the first domain name information to the DNS server. More specifically, the second network element sends, to the DNS server, the first domain name information and a second option, namely, a second ECS option generated based on the second option information, so that the DNS server queries a corresponding application server address. It should be understood that the first network element may determine same second option information or different second option information for the terminal devices in the terminal group.

In a possible implementation, the second identification information or the first name is included in the first information sent by the fourth network element to the first network element, and the first network element directly selects the second identification information or the first name.

In a possible implementation, the second option information is included in first information sent by the fourth network element to the first network element, and the first network element directly selects the second option information.

In a possible implementation, the first network element stores the second identification information or the first name, and selects the second identification information or the first name.

In a possible implementation, the first network element stores the second option information, and selects the second option information.

In a possible implementation, a third network element stores the second identification information or the first name, and provides the second identification information or the first name for the first network element.

Before the first network element sends the third rule, the method further includes: The first network element receives sixth information; and correspondingly, the third network element sends the sixth information, where the sixth information includes the second identification information. The third network element may actively send the second identification information to the first network element.

Optionally, before the first network element sends the third rule, the method further includes: The first network element receives sixth information; and correspondingly, the third network element sends the sixth information, where the sixth information includes the first name. The third network element may actively send the first name to the first network element.

Optionally, before the first network element receives the sixth information, the first network element sends seventh information, and correspondingly, the third network element receives the seventh information, where the seventh information is used to obtain edge network information corresponding to the first domain name information. The third network element may send the second identification information or the first name after receiving request information for obtaining the edge network information from the first network element.

In a possible implementation, if neither the third network element nor the first network element stores the second identification information and the first name, the first network element determines the second identification information or the first name based on a service corresponding to location information of the first terminal device or the first domain name information. If the terminal devices in the terminal group are connected to different first network elements, the first network element determines the edge network for the first terminal device. That is, after determining the second identification information or the first name, the first network element needs to send the second identification information or the first name to the third network element, and the third network element coordinates and confirms that edge networks determined by the first network elements for the terminal devices in the terminal group are the same, which may also be understood as that the third network element coordinates and confirms that each first network element determines the same data network access identifier or local data network name for each terminal device in the terminal group.

Specifically, the first network element sends second request information, and correspondingly, the third network element receives the second request information, where the second request information includes the second identification information. The first network element receives second response information responding to the third request information, where the second response information includes fourth identification information, and the fourth identification information indicates an edge network determined by the third network element. If the fourth identification information returned by the third network element is different from the edge network, corresponding to the second identification information, determined by the second network element, the first network element needs to reselect an edge network until an edge network selected by the first network element is the same as the edge network returned by the third network element, that is, the fourth identification information and the second identification information correspond to the same edge network.

After the first network element finally determines the edge network, the first network element sends a fourth rule, and correspondingly, the second network element receives the fourth rule, where the fourth rule includes first application server address information, the first application server address information indicates an application server, in the edge network, corresponding to the second identification information, and the fourth rule indicates the second network element to send the first application server address information to the first terminal device.

The first network element selects an application server address from the same edge network determined for the terminal group, that is, the edge network corresponding to the second identification information, and sends the application server address to the second network element by using the fourth rule. The second network element sends the application server address to the terminal device, so that each terminal device in the same terminal group can be connected to the application server in the same edge network. This reduces an interaction delay between the plurality of terminal devices.

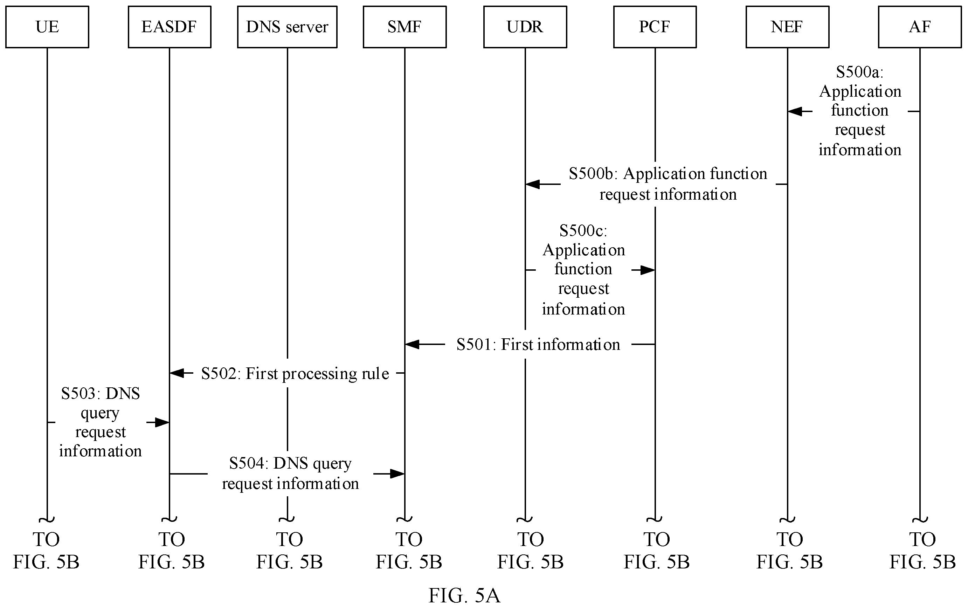

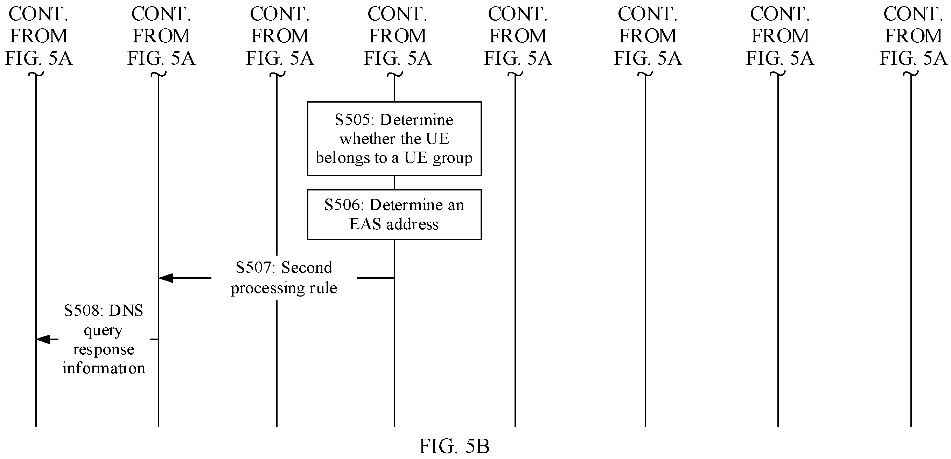

FIG. 5A and FIG. 5B are a schematic interaction diagram of still another method for discovering an edge service according to an embodiment of this application. A PCF network element may directly determine a corresponding EAS address for a UE group, and send the EAS address to an SMF network element. The SMF network element provides the EAS address for each UE in the same UE group, so that each UE in the UE group is connected to a same EAS.

S500: The PCF network element receives application function request information from an AF network element.

Optionally, step S500 may include steps S500a, S500b, and S500c. To be specific, the PCF network element may directly receive the application function request information from the AF network element; or the AF network element may first send the application function request information to an NEF network element, and then the NEF network element sends the application function request information to the PCF network element; or the AF network element may first send the application function request information to the NEF network element, then the NEF network element sends the application function request information to a UDR network element, and then the UDR network element sends the application function request information to the PCF network element.

The application function request information includes service information. The service information may also be referred to as first service information. The service information may indicate a service accessed by the UE group. The service information may include an FQDN or identification information of an application. The identification information of the application may include an ID, an identity code, group information, or the like of the application. This is not limited in this application. The application function request information may be used to control routing of a service traffic.

Optionally, the application function request information may further include location area information. The location area information may indicate location area information corresponding to the UE group, which may be understood as that UE that is located in the location area and that accesses the service corresponding to the service information belongs to the same UE group. For example, the location area information may be location area information or geographical location area information.

Optionally, the application function request information may further include UE group identification information. Terminal devices belonging to the same UE group correspond to the same UE group identification information. The UE group identification information may also be referred to as first identification information, or referred to as a UE association identifier.

Optionally, the application function request information may further include a UE list. The UE list may include one or more pieces of UE ID information. The UE ID information is UE identification information indicating specific UE included in the UE group, or the UE list may be referred to as UE information or UE identification information. When the application function request information includes both the UE group identification information and the UE list, it means that the UE group identification information corresponds to the UE in the UE list, or it may be understood as that the UE group identification information is specified for the UE in the UE list.

Optionally, the application function request information may further include first indication information. The first indication information indicates to select the same EAS for the UE belonging to the same UE group, which may also be understood as that the first indication information indicates to determine a same application server for terminal devices, or may be understood as that the first indication information indicates to determine a same application server for terminal devices accessing a same service, or may be understood as that the first indication information indicates to determine a same application server for terminal devices, or may be understood as that the first indication information indicates to determine a same application server for terminal devices accessing a same service and that correspond to the same first identification information, or may be understood as that the first indication information indicates to determine a same application server for terminal devices that access a service corresponding to first service information.

Optionally, the first indication information or second indication information may be implicitly carried in first information. For example, a message name is used to implicitly carry the first indication information.

Optionally, the application function request information may further include EAS address information, where the EAS address information is used to determine an address of the EAS connected to the UE group.

S501: The SMF network element receives the first information from the PCF network element.

The PCF network element generates the first information based on the application function request information, and sends the first information to the SMF network element.

Correspondingly, the PCF network element generates service information in the first information based on service information in the application function request information. The service information may also be referred to as first service information. The service information indicates the service accessed by the UE group. The service information may include an FQDN or identification information of an application. The identification information of the application may include an ID, an identity code, group information, or the like of the application. This is not limited in this application.

Optionally, when the application function request information includes the location area information, the PCF network element generates the first information for the UE in the location area. The UE that is located in the location area and that accesses the service corresponding to the service information belongs to the same UE group. The first information includes the location area information of the UE group. For example, the location area information may be location area information or geographic location area information.

Optionally, when the application function request information includes the UE group identification information, the PCF network element generates UE group identification information in the first information based on the UE group identification information in the application function request information. The terminal devices belonging to the same UE group correspond to a same UE group identifier, and the UE group identifier may be the first identification information.

Optionally, when the application function request information includes the UE list, the PCF generates the first information for the UE included in the UE list. The first information includes a UE list, the UE list may include one or more pieces of UE ID information, and the UE list indicates specific UE included in the UE group.

This application merely shows an example of grouping the UE group based on a geographical location, a group identifier, a UE list, and the like, but should not limit a specific grouping manner of the UE group.

Optionally, when the application function request information includes the first indication information, the PCF network element generates the first information for the UE in the UE group based on the first indication information, and generates first indication information in the first information based on the first indication information in the application function request information. The first indication information indicates the SMF network element to select the same EAS address for each UE belonging to the same UE group.

Optionally, the first indication information may be implicitly carried in the first information. For example, a message name is used to implicitly carry the first indication information.

Optionally, when the application function request information includes the EAS address information, the PCF network element generates EAS address information in the first information based on the EAS address information in the application function request information. That is, the first information may further include the EAS address information, so that the SMF network element directly selects the EAS address and provides the EAS address for the UE.

Optionally, the service information, the UE group identification information, the UE list, the location area information of the UE group, the first indication information, and the EAS address information may not be included in the first information, but are separately sent.

S502: The SMF network element sends a first processing rule to an EASDF network element.

The SMF network element sends the first processing rule to the EASDF network element, where the first processing rule includes an FQDN of a service accessed by the UE and a processing rule. When determining that an FQDN included in a DNS query request information from the UE corresponds to the FQDN in the first processing rule, the EASDF network element reports, according to the processing rule, content corresponding to the DNS query request information, for example, the FQDN in the DNS query request information.

S503: The UE sends the DNS query request information to the EASDF network element.

The DNS query request information includes the FQDN of the service to be queried by the UE.

S504: The EASDF network element sends, to the SMF network element, information corresponding to the DNS query request information.

If the EASDF determines that the FQDN carried in the DNS query request information corresponds to the FQDN in the first rule, the EASDF network element reports, to the SMF network element according to the first rule, content corresponding to the DNS query request information, for example, the FQDN in the DNS query request information.

S505: The SMF network element determines whether the UE belongs to the UE group.

The SMF determines, based on the first information, whether the UE belongs to the UE group.

In a possible implementation, the SMF network element determines, based on the FQDN carried in the DNS query request information, whether the UE belongs to the UE group, and if the FQDN corresponds to the service information in the first information, determines that the UE belongs to the UE group. That the FQDN corresponds to the service information in the first information may be understood as that the FQDN is included in the service information, or that the FQDN corresponds to the service information in the first information may be understood as that a service corresponding to the FQDN belongs to a service included in the service information. For example, if first domain name information includes an FQDN 1, and the service information includes an FQDN 1, an FQDN 2, and the like, the first domain name information corresponds to the service information; or if the first domain name information includes an FQDN 1, the FQDN 1 is a domain name of a service 1, the service information includes an application ID-1 and an application ID-2, and the application ID-1 is an ID of a service 1, the first domain name information corresponds to the service information.

In a possible implementation, each UE in the UE group corresponds to the same UE group identifier. The SMF network element determines, for the UE based on the UE group identifier, the EAS that is the same as that of another UE in the UE group. The SMF network element may determine the same EAS for each UE corresponding to the UE group identifier.

In a possible implementation, each UE in the UE group is located in the same location area. The SMF network element determines, for the UE based on the location area information of the UE group, the EAS that is the same as that of others in the UE group. The SMF network element may determine the same EAS for each UE corresponding to the same location area.

S506: The SMF network element determines an EAS address for the UE.

If determining that the UE belongs to the UE group, the SMF network element determines, for the UE, the EAS address that is the same as that of another UE in the UE group.

Optionally, the determined EAS address may be the EAS address carried in the first information.

Optionally, the determined EAS address may also be the EAS address that corresponds to the UE group and that is prestored by the SMF network element.

S507: The SMF network element sends a second processing rule to the EASDF network element.

The second processing rule includes the EAS address and a processing rule. The second processing rule may also be referred to as a first rule. The EAS address is the EAS address determined by the SMF network element. The processing rule indicates the EASDF network element to send the EAS address to the UE.

S508: The EASDF network element sends a DNS query response information to the UE.

The EASDF network element sends the EAS address to the UE according to the second processing rule. The EAS address may be included in the DNS query response information sent by the EASDF network element.

The UE belonging to the same UE group may be connected to the same SMF network element, or may be connected to different SMF network elements. If the UE is connected to different SMF network elements, each SMF selects the EAS address carried in the first information for the UE belonging to the same UE group, so that each UE in the UE group is connected to the same EAS. This reduces an interaction delay between the multiple UE.

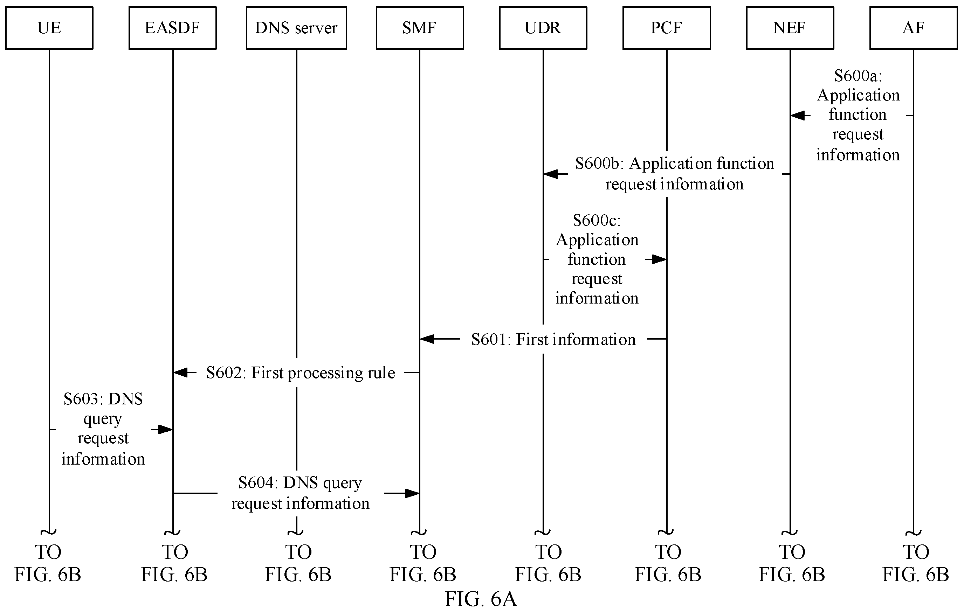

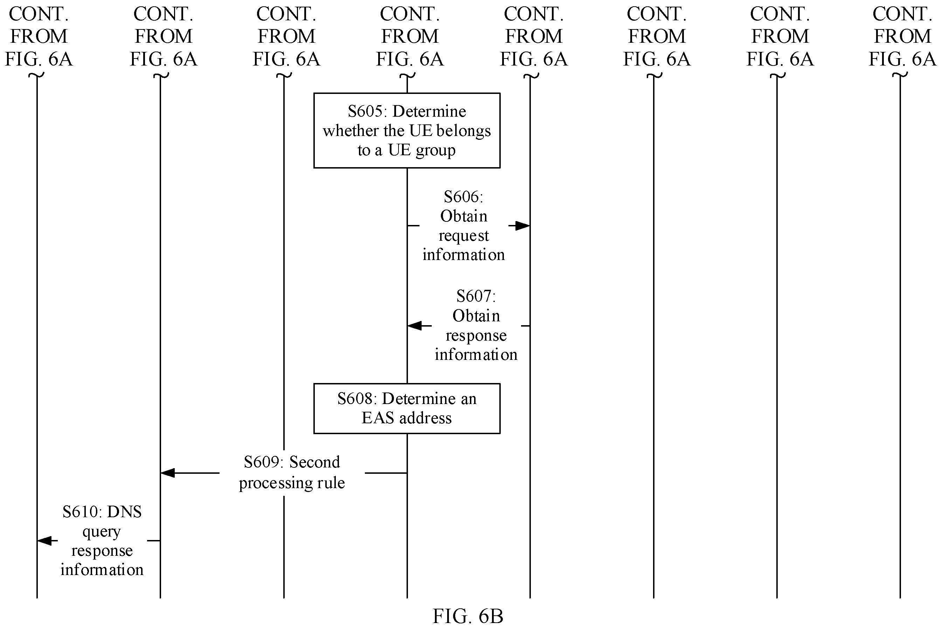

FIG. 6A and FIG. 6B show yet another method for discovering an edge service not falling under the scope of the claims. A UDR network element may store an EAS address corresponding to a UE group and send the EAS address to an SMF network element, and the SMF network element provides the EAS address for each UE belonging to the UE group, so that each UE in the UE group is connected to a same EAS. In this application, that the UDR network element stores the EAS address corresponding to the UE group and coordinates a plurality of SMFs to select the same EAS for the UE group is merely an example. Alternatively, the UDR network element may be replaced by another network element. This is not limited herein.

As shown in FIG. 6A and FIG. 6B, steps S600 to S605 are respectively similar to steps S500 to S505 described in FIG. 5A and FIG. 5B. To avoid repetition, details are not described herein again. In step S601, first information may not include the EAS address.

S606: The SMF network element sends obtaining request information to the UDR network element.

In a possible implementation, if the SMF network element does not store the EAS address of a service corresponding to the UE group, a PCF network element does not provide the corresponding EAS address, and the UDR network element stores the EAS address corresponding to the UE group, the SMF network element may send the obtaining request information to the UDR network element, to request to obtain the EAS address of the service corresponding to the UE group, where the obtaining request information may include UE group information.

S607: The UDR network element sends obtaining response information to the SMF network element.

The obtaining response information includes the EAS address of the service corresponding to the UE group.

Optionally, the UDR network element may actively send the EAS address to the SMF network element, without being triggered by the obtaining request information to send the EAS address. In other words, step S606 may not exist, and step S607 is directly performed.

Steps S608 to S610 are respectively similar to steps S506 to S508 described in FIG. 5B. To avoid repetition, details are not described herein again.

Similarly, the UE belonging to the same UE group may be connected to a same SMF network element, or may be connected to different SMF network elements. The one or more SMFs select the EAS address provided by the UDR network element for each UE belonging to the same UE group, so that each UE in the UE group is connected to the same EAS. This reduces an interaction delay between multiple UE.

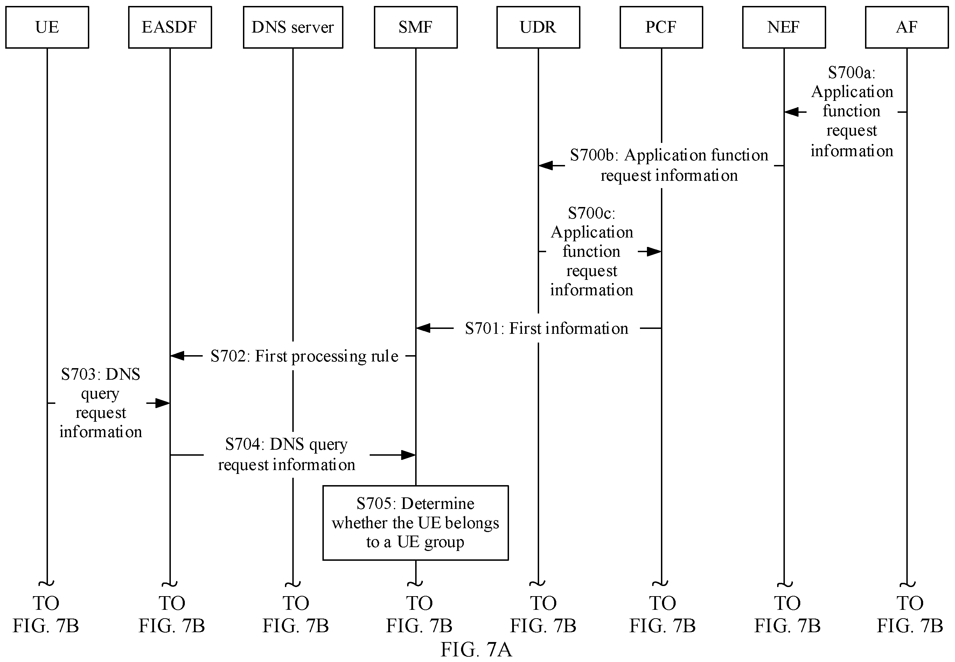

FIG. 7A to FIG. 7C show still yet another method for discovering an edge service not falling under the scope of the claims. When neither an SMF network element nor a UDR network element stores an EAS address corresponding to a UE group, a DNS server may query the corresponding EAS address. If there are a plurality of SMF network elements, the UDR network element may perform coordination, so that each SMF network element determines a same EAS for each UE in the UE group.

Steps S700 to S707 are similar to steps S600 to S607 described in FIG. 6A and FIG. 6B. To avoid repetition, details are not described herein again. In step S707, obtaining response information may indicate that the UDR network element does not store the EAS address corresponding to the UE group.

S708: The SMF network element sends a third processing rule to an EASDF network element.

In a possible implementation, neither the SMF network element nor the UDR network element stores the EAS address corresponding to the UE group, and the SMF network element sends the third processing rule to the EASDF network element. The third processing rule may also be referred to as a second rule. The third processing rule includes ECS option information and a processing rule. The processing rule indicates the EASDF network element to add ECS option information to DNS query request information, and specifically, the processing rule indicates the EASDF network element to add, to the DNS query request information, an ECS option, namely, an ECS option, generated based on the ECS option information, and send the DNS query request information to the DNS server. The ECS option information includes location information of the UE, and the location information may be an IP address of a network accessed by the UE.

S709: The EASDF network element sends the DNS query request information to the DNS server.

In a possible implementation, the EASDF network element adds the ECS option information to the DNS query request information according to the third processing rule. Specifically, the processing rule indicates the EASDF network element to add, to the DNS query request information, the ECS option generated based on the ECS option information, and send the DNS query request information to the DNS server, where the DNS query request information includes an FQDN and an ECS option of the UE.

S710: The DNS server sends DNS query response information to the EASDF network element.

The DNS server queries the EAS address of a corresponding service based on the FQDN and ECS options, adds the EAS address to the DNS query response information, and sends the response information to the EASDF network element.

Optionally, there may be one or more EAS addresses.

S711: The EASDF network element sends, to the SMF network element, content corresponding to the DNS query response information.

The content corresponding to the DNS query response information may include the one or more EAS addresses.

Optionally, the DNS query response information may further include the FQDN of the service.

S712: The SMF network element selects the EAS address corresponding to the UE group.

The SMF network element selects one EAS address for the UE from the one or more EAS addresses. If each UE in the UE group is connected to the same SMF network element, the SMF network element selects the EAS address for each UE, and steps S713 and S714 do not need to be performed.

S713: The SMF network element sends update request information to the UDR network element.

In a possible implementation, if each UE in the UE group is connected to different SMF network elements, to prevent the SMF network elements from selecting different EAS addresses for the UE in the same UE group, the SMF network element may send the update request information to the UDR network element, and the UDR network element performs coordination and update, so that the SMF network element finally determines the same EAS address for the UE in the UE group. The update request information includes the EAS address determined by the SMF network element in step S712.

S714: The UDR network element sends update response information to the SMF network element.

After receiving the update request information from the SMF network element, the UDR network element determines an EAS accessed by first UE accessing an edge service in the UE group, and sends update response information to the SMF network element that subsequently sends an update request. The update response information includes the EAS address. Each SMF network element determines the EAS address for each UE. The EAS address determined by the SMF network element in step S712 may be the same as or different from the EAS address sent by the UDR network element.

Steps S715 and S716 are similar to steps S609 and S610 described in FIG. 6B. To avoid repetition, details are not described herein again.

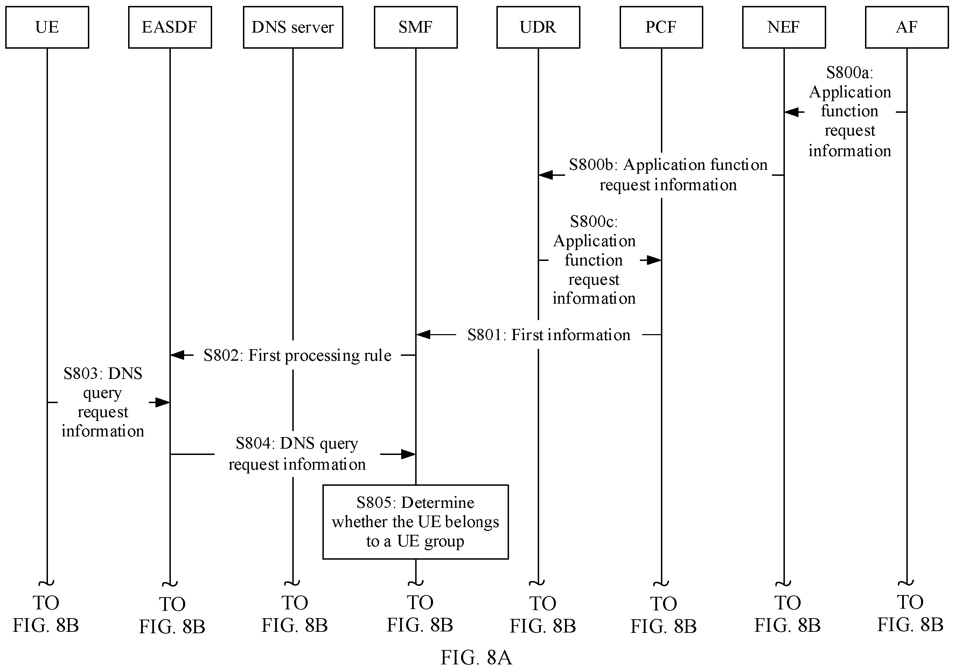

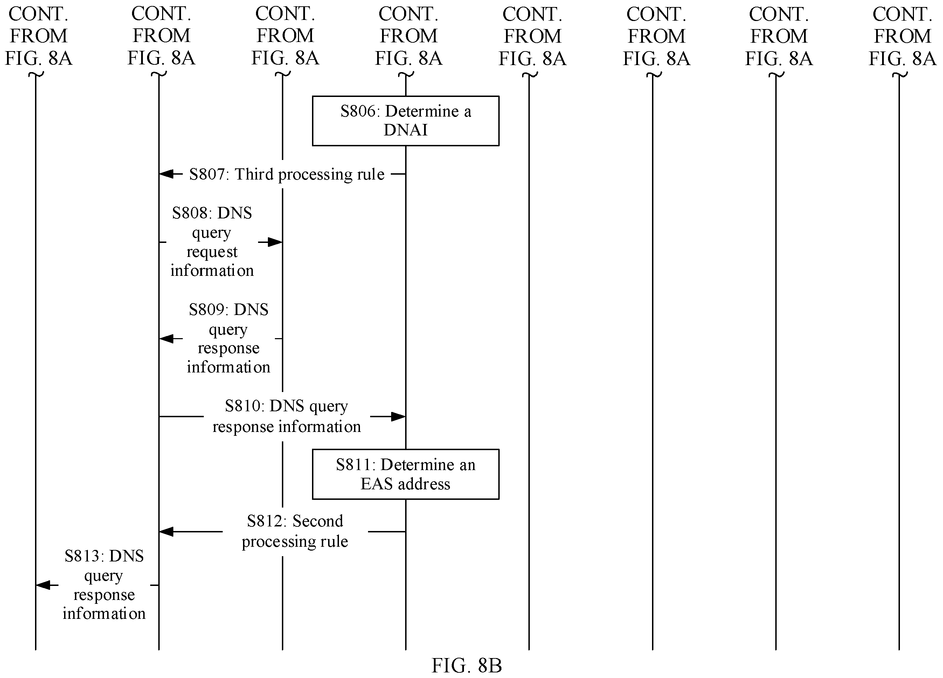

The methods described in FIG. 5A to FIG. 7C are that the SMF network element determines the same EAS address for each UE belonging to the same UE group. The methods described in FIG. 8A to FIG. 11C are that an SMF network element selects an EAS address in a same edge network for each UE belonging to the same UE group. As shown in FIG. 8A and FIG. 8B, a UDR network element forwards only application function request information, and does not need to store or coordinate a DNAI.

S800: A PCF network element receives the application function request information from an AF network element.

The application function request information includes service information. Optionally, the application function request information may further include location area information, UE group identification information, namely, third identification information, and a UE list. Content corresponding to the application function request information is similar to content described in step S500, and may include steps S800a, S800b, and S800c. To avoid repetition, details are not described herein again.

Optionally, the application function request information includes second indication information, and the second indication information is used to select the EAS in the same edge network for the UE belonging to the same UE group.

Optionally, the application function request information may further include ECS option information, the ECS option information is an ECS option corresponding to the UE group, and the ECS option information is used to determine an edge application server accessed by the UE in the UE group.

Optionally, the application function request information may further include the DNAI or LDN information corresponding to the UE group, where the DNAI may be second identification information, the LDN information may be a name of an LDN, and the DNAI or LDN information is used to determine the edge application server connected to the UE group in the corresponding edge network.

S801: The SMF network element receives first information from the PCF network element.

Correspondingly, step S801 is similar to step S501. To avoid repetition, details are not described herein again.

A difference is that when the application function request information includes the second indication information, the PCF network element generates the first information for the UE in the UE group based on the second indication information, and generates second indication information in the first information based on the second indication information in the application function request information. In other words, the second information includes the second indication information, and the second indication information indicates the SMF network element to select the EAS address corresponding to the same DNAI for each UE belonging to the same UE group, which may be understood as that the second indication information indicates to determine the application server in the same edge network for terminal devices accessing a same service, or may be understood as that the second indication information indicates to determine the application server in the same edge network for terminal devices, or may be understood as that the second indication information indicates to determine application servers in the same edge network for terminal devices that access the same service and correspond to the same third identification information, or may be understood as that the second indication information indicates to determine the application server in the same edge network for terminal devices that access a service corresponding to first service information.

Optionally, when the application function request information includes the ECS option information, the PCF network element generates ECS option information in the first information based on the ECS option information in the application function request information.

Optionally, when the application function request information includes the DNAI, the PCF network element generates a DNAI in the first information based on the DNAI in the application function request information.

Steps S802 to S805 are similar to steps S502 to S505 described in FIG. 5A and FIG. 5B. To avoid repetition, details are not described herein again.

S806: The SMF network element determines the DNAI.

In a possible implementation, if the first information includes the DNAI corresponding to the UE group, the determined DNAI is the DNAI in the first information, and the ECS option corresponding to the DNAI is selected.

In a possible implementation, if the first information includes the ECS option information corresponding to the UE group, the SMF network element does not need to determine the DNAI, and the SMF network element selects the ECS option for a DNS server to query the corresponding EAS address.

In a possible implementation, if the UE in the same UE group is connected to the same SMF network element, the SMF network element may determine the DNAI based on a location of the UE in the UE group, or determine the DNAI based on a service accessed by the UE, and the SMF network element may select the DNAI for each UE in the same UE group, and select the ECS option corresponding to the DNAI.

In a possible implementation, if the UE in the same UE group is connected to the same SMF network element, and the SMF stores the DNAI corresponding to the UE group, the SMF network element determines the DNAI for the UE in the UE group.

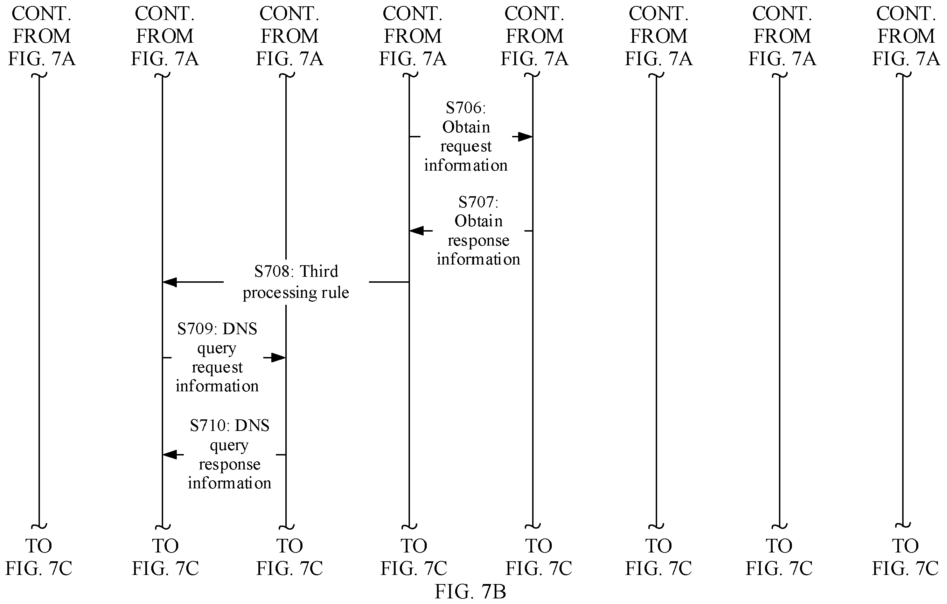

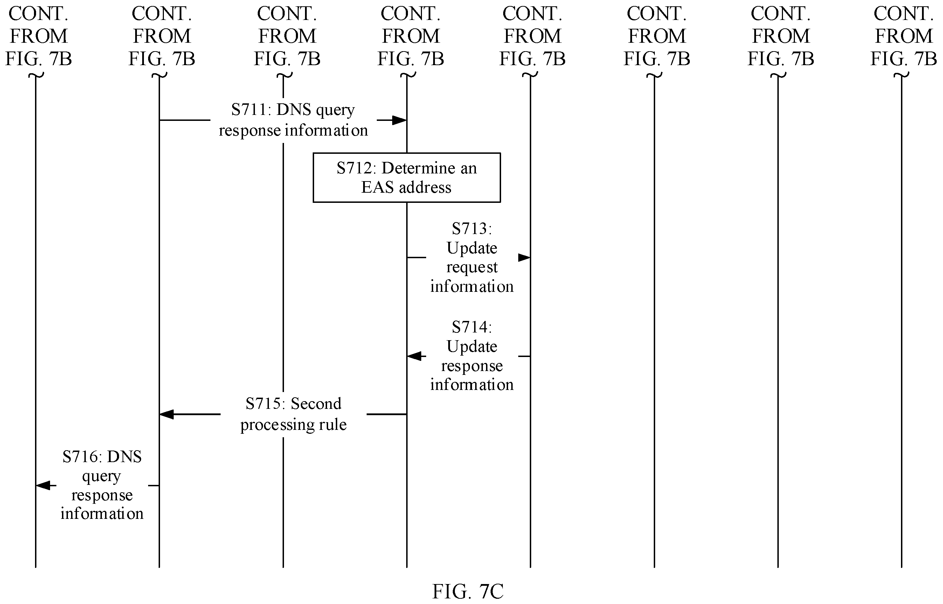

Steps S807 to S813 are respectively similar to steps S708 to S712 and S715 and S716 described in FIG. 7B and FIG. 7C. To avoid repetition, details are not described herein again.

In step S807, a third processing rule may also be referred to as a third rule. In step S812, a second processing rule may also be referred to as a fourth rule.

In this embodiment provided in this application, when the PCF network element provides the DNAI, the UE belonging to the same UE group may be connected to a same SMF network element, or may be connected to different SMF network elements. The one or more SMFs select, for the UE belonging to the same UE group, the EAS address in the edge network corresponding to the DNAI provided by the PCF network element. However, when the UE in the same UE group is connected to the same SMF network element, the PCF network element does not need to provide the DNAI or the ECS option information. The SMF network element selects the EAS address corresponding to the same DNAI from EAS addresses queried by the DNS, and provides the EAS address for the UE, so that each UE in the UE group is connected to the EAS in the edge network corresponding to the same DNAI. This reduces an interaction delay between multiple UE.

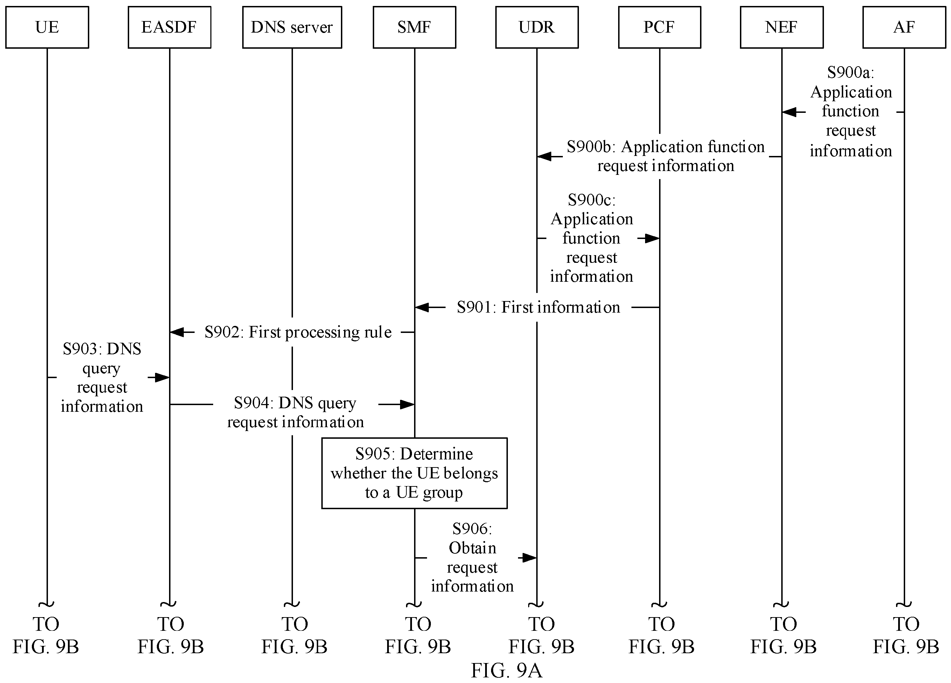

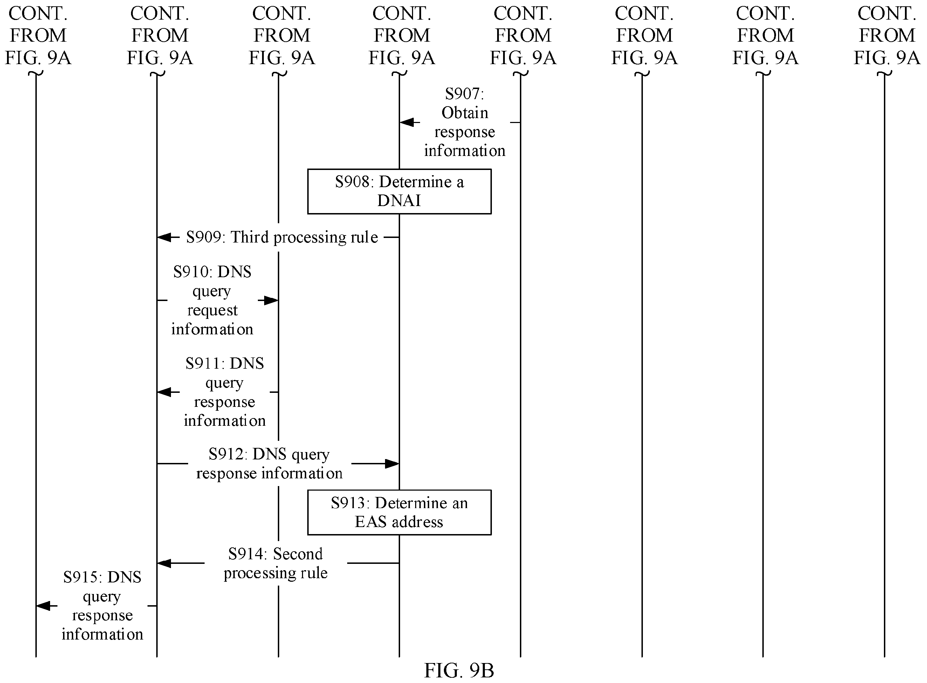

FIG. 9A and FIG. 9B are a schematic interaction diagram of a still further method for discovering an edge service not falling under the scope of the claims. A UDR network element may store a DNAI corresponding to a UE group and send the DNAI to an SMF network element. The SMF network element selects an EAS address corresponding to the DNAI and provides the EAS address for each UE in a same UE group, so that each UE in the UE group is connected to an EAS in an edge network corresponding to the same DNAI.

Steps S900 to S905 are respectively similar to steps S800 to S805 described in FIG. 8A. Details are not described herein again.

Step S906: The SMF network element sends obtaining request information to the UDR network element.

Optionally, if the SMF network element does not store the DNAI of a service corresponding to the UE group, but the UDR network element stores the DNAI corresponding to the UE group, the SMF network element may send the obtaining request information to the UDR network element, to request to obtain the DNAI of the service corresponding to the UE group. The obtaining request information may further include UE group information.

S907: The UDR network element sends obtaining response information to the SMF network element.

The obtaining response information includes the DNAI of the service corresponding to the UE group.

Optionally, the UDR network element may actively send the DNAI to the SMF network element, without being triggered by the obtaining request information to send the DNAI. In other words, step S906 may not exist, and step S907 is directly performed.

S908: The SMF network element determines the DNAI.

The SMF network element determines, for the UE in the UE group, the DNAI provided by the UDR network element.

Steps S909 to S915 are respectively similar to steps S807 to S813 described in FIG. 8B. Details are not described herein again.

Similarly, the UE belonging to the same UE group may be connected to a same SMF network element, or may be connected to different SMF network elements. If the UE is connected to different SMF network elements, each SMF selects, for the UE belonging to the same UE group, an EAS address in the edge network corresponding to the DNAI provided by the UDR network element, so that each UE in the UE group is connected to the EAS in the edge network corresponding to the same DNAI. This reduces an interaction delay between multiple UE.

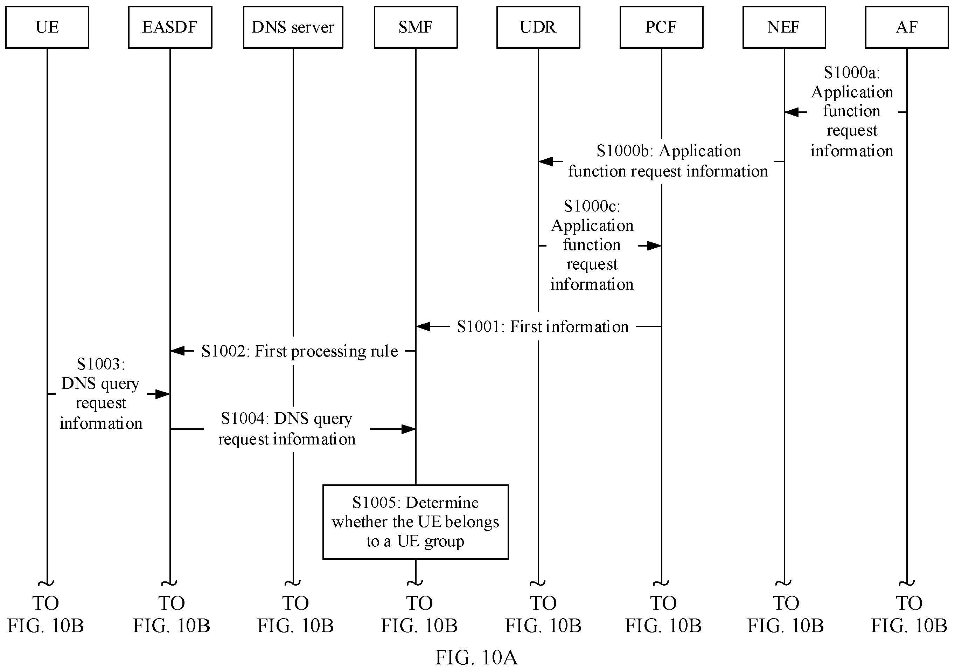

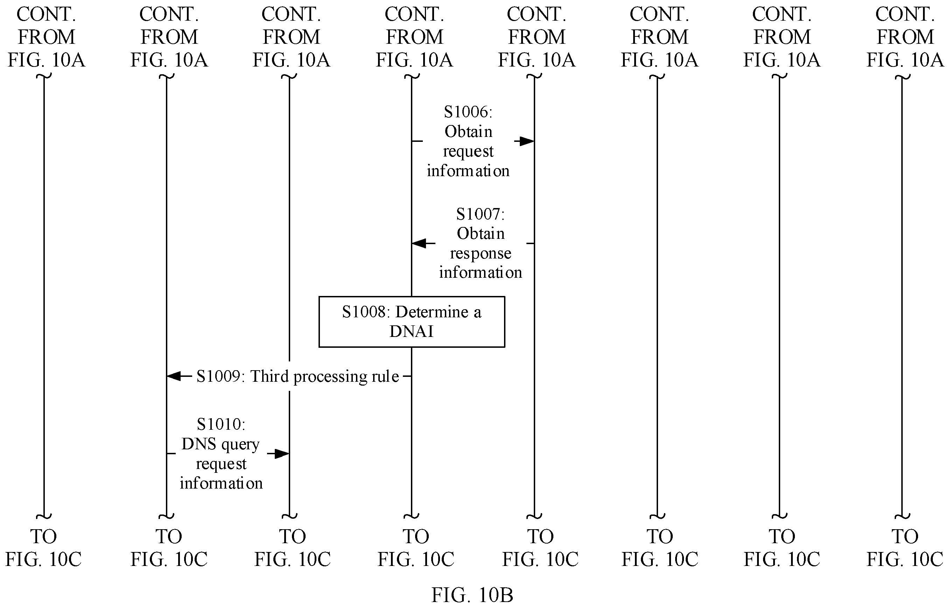

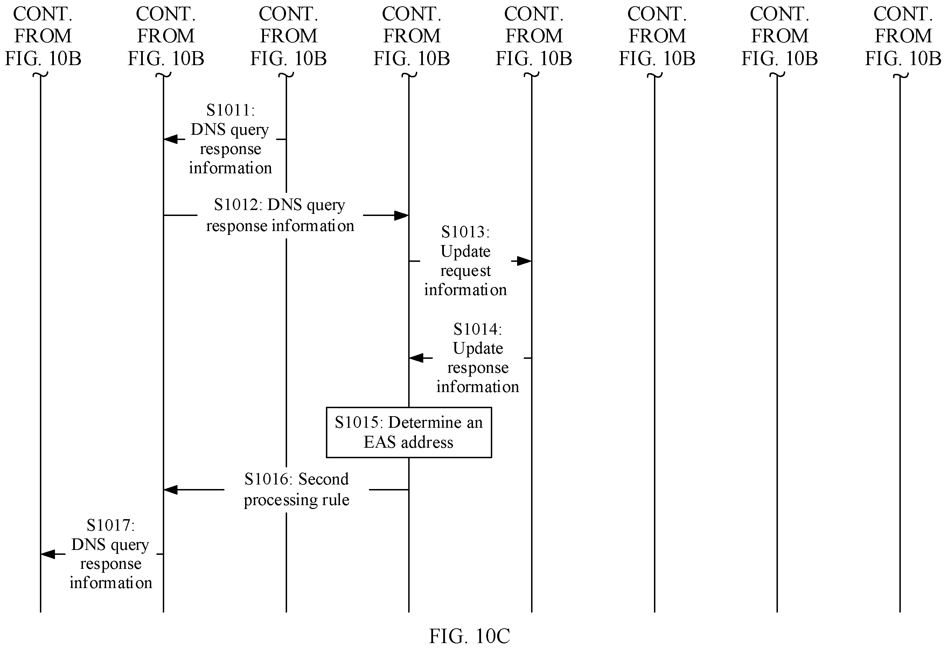

FIG. 10A to FIG. 10C show a yet further method for discovering an edge service not falling under the scope of the claims. When neither an SMF network element nor a UDR network element stores a DNAI corresponding to a UE group, the SMF network element may select the DNAI based on a service or a location of UE, and the UDR network element performs coordination, so that when there are a plurality of SMF network elements, each SMF network element determines an EAS address corresponding to the same DNAI for each UE in the UE group.

Steps S1000 to S1007 are respectively similar to steps S900 to S607 described in FIG. 9A and FIG. 9B. Details are not described herein again. In step S1007, obtaining response information may indicate that the UDR network element does not store the DNAI corresponding to the UE group.

S1008: The SMF network element determines the DNAI.

The DNAI is a DNAI that corresponds to the service accessed by the UE and that is stored by the SMF network element. If each UE in the same UE group is connected to the same SMF network element, the SMF network element selects the DNAI for each UE in the UE group, and steps S 1013 and S 1014 do not need to be performed.

Steps S1009 to S1012 are respectively similar to steps S909 to S912 described in FIG. 9B. Details are not described herein again.

S1013: The SMF network element sends update request information to the UDR network element.

In a possible implementation, if each UE in the UE group is connected to different SMF network elements, to prevent the SMF network elements from selecting different DNAIs for the UE in the same UE group, the SMF network element may send the update request information to the UDR network element, and the UDR network element performs coordination and update, so that the SMF network element finally determines the same EAS address for the UE in the UE group. The update request information includes the DNAI determined by the SMF network element in step S1008.

S1014: The UDR network element sends update response information to the SMF network element.

After receiving the update request information from the SMF network element, the UDR network element determines a DNAI corresponding to an EAS accessed by first UE accessing an edge service in the UE group, and sends the update response information to the SMF network element that subsequently sends an update request. The update response information includes the DNAI. Each SMF network element determines the EAS address in the edge network corresponding to the DNAI for each UE.

In a possible implementation, if the DNAI determined by the SMF network element in step S1008 is different from the DNAI sent by the UDR network element, steps S1008 to S1014 are performed again, until the DNAI determined by the SMF network element for the UE group is the same as the DNAI sent by the UDR network element.

Steps S1015 to S1017 are respectively similar to steps S913 to S915 described in FIG. 9B. Details are not described herein again.

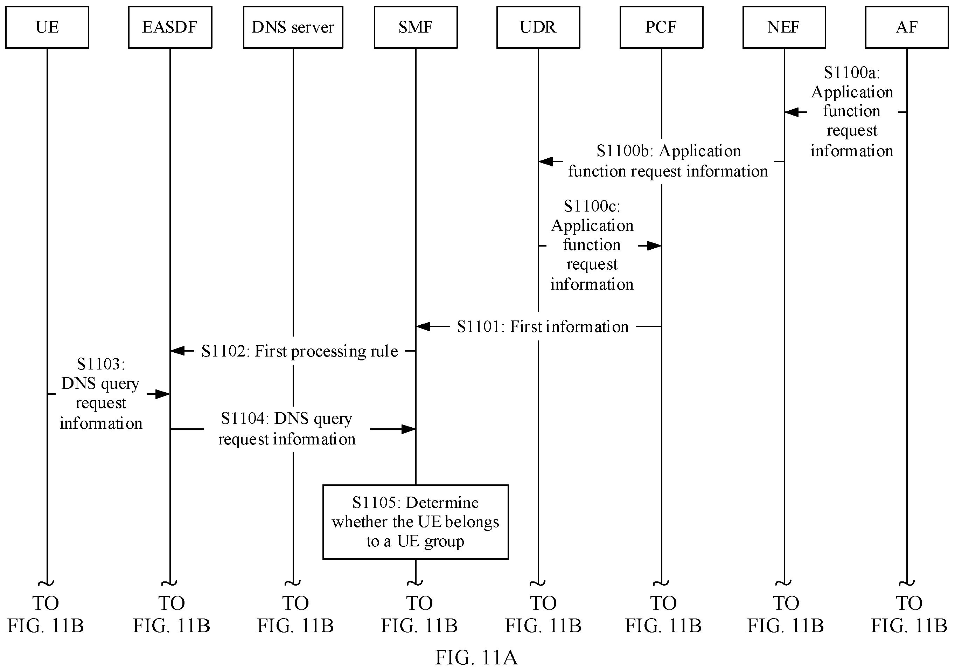

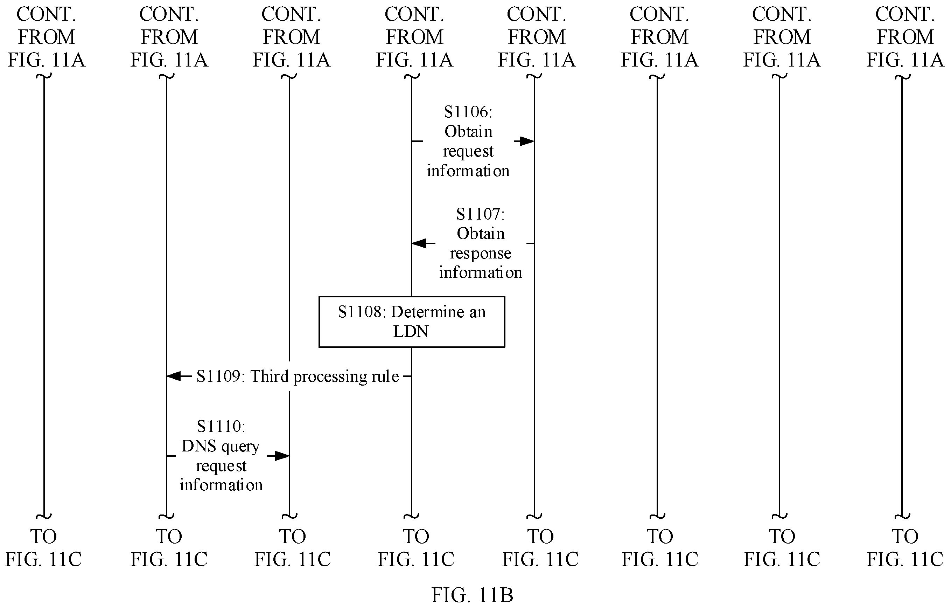

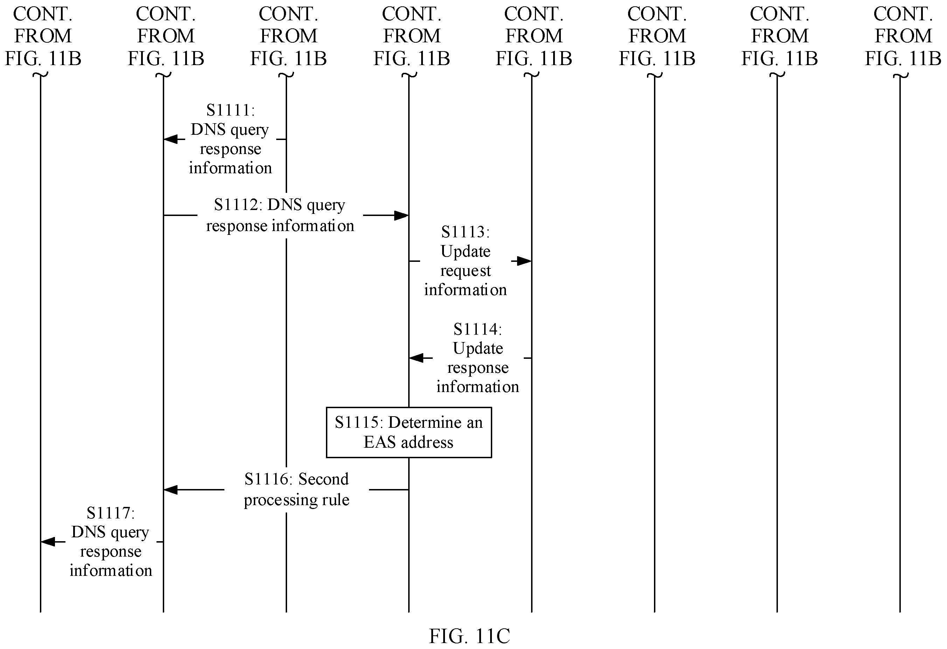

FIG. 11A to FIG. 11C are a schematic interaction diagram of a still yet further method for discovering an edge service not falling under the scope of the claims. An SMF network element selects an EAS address in a same LDN for UE in a same UE group, so that each UE in the UE group is connected to an EAS in the same LDN.

Steps S1100 to S1105 are respectively similar to steps S800 to S805 described in FIG. 8A. Details are not described herein again. In step S1100, application function request information may include LDN information and/or ECS option information. Correspondingly, first information may include LDN information and/or ECS option information. The LDN information may be a name of an LDN. If the first information includes the LDN information and/or ECS option information, steps S1106 and S1007 and steps S1113 and S1114 do not need to be performed. In addition, the first information may further include second indication information, and the second indication information indicates the SMF network element to select the EAS address in the same LDN for the UE in the same UE group.

S1106: The SMF network element sends obtaining request information to a UDR network element.

In a possible implementation, if the first information does not include the LDN information of a service corresponding to the UE group, the SMF network element does not store the LDN information of the service corresponding to the UE group, and the UDR network element stores the LDN information corresponding to the UE group, the SMF network element may send the obtaining request information to the UDR network element, to request to obtain the LDN information of the service corresponding to the UE group.

Optionally, the obtaining request information includes UE group information.

S1107: The UDR network element sends obtaining response information to the SMF network element.

The obtaining response information includes the LDN information of the service corresponding to the UE group.

In a possible implementation, the UDR network element may actively send the LDN information to the SMF network element, without being triggered by the obtaining request information sent by the SMF network element to send the LDN information. In other words, the SMF network element may not need to perform step S1106, and step S1107 is directly performed.

S1108: The SMF network element determines the LDN.

In a possible implementation, if the first information includes the LDN information corresponding to the UE group, the SMF network element selects, for each UE in the terminal group, the LDN information in the first information, and selects an ECS option corresponding to the LDN.

In a possible implementation, if the UDR network element stores the LDN information corresponding to the UE group, the SMF network element selects, for each UE in the terminal group, the LDN information sent by the UDR network element, and selects an ECS option corresponding to the LDN.

In a possible implementation, if the SMF network element stores the LDN information corresponding to the UE group, the SMF network element selects the LDN information for each UE in the terminal group, and selects an ECS option corresponding to the LDN.

In a possible implementation, when the first information does not include the LDN information corresponding to the UE group, and neither the SMF network element nor the UDR network element stores the LDN information of the service corresponding to the UE group, the SMF network element determines the LDN information based on the service accessed by the UE or a location area, and selects an ECS option corresponding to the LDN.

Steps S1109 to S1112 are respectively similar to steps S807 to S810 described in FIG. 8B. Details are not described herein again.

S1113: The SMF network element sends update request information to the UDR network element.

In a possible implementation, when each UE in the UE group is connected to different SMF network elements, and the SMF network elements determine the LDN information based on the service accessed by the UE or the location area, to prevent the LDN information determined by the SMF network elements from being different, the SMF network element sends the update request information to the UDR network element. The update request information includes the LDN information determined by the SMF network element, for the UDR network element to perform coordination.

S1114: The UDR network element sends update response information to the SMF network element.

In a possible implementation, the update response information includes the LDN information selected by the UDR, and the LDN information may be an LDN accessed by first UE accessing the edge service in the UE group. The UDR network element maintains the LDN information, and sends the LDN information to each SMF network element in the update request information.

If the LDN information in the update response information is different from the LDN information in the update request information, the SMF network element performs steps S1108 to S1114 again until the LDN information determined by the SMF network element is the same as the LDN information maintained by the UDR network element.

Optionally, the LDN information determined by the SMF network element may also be the same as the LDN information maintained by the UDR network element. In this case, the SMF network element or the like directly performs steps S1116 and S1117.

S1115: The SMF network element determines the EAS address.

The SMF network element selects an EAS address from the determined LDN, and sends the EAS address to an EASDF network element by using a second processing rule, and the EASDF network element sends the EAS address to the UE, that is, steps S1116 and S1117 are performed. Details are not described herein again.

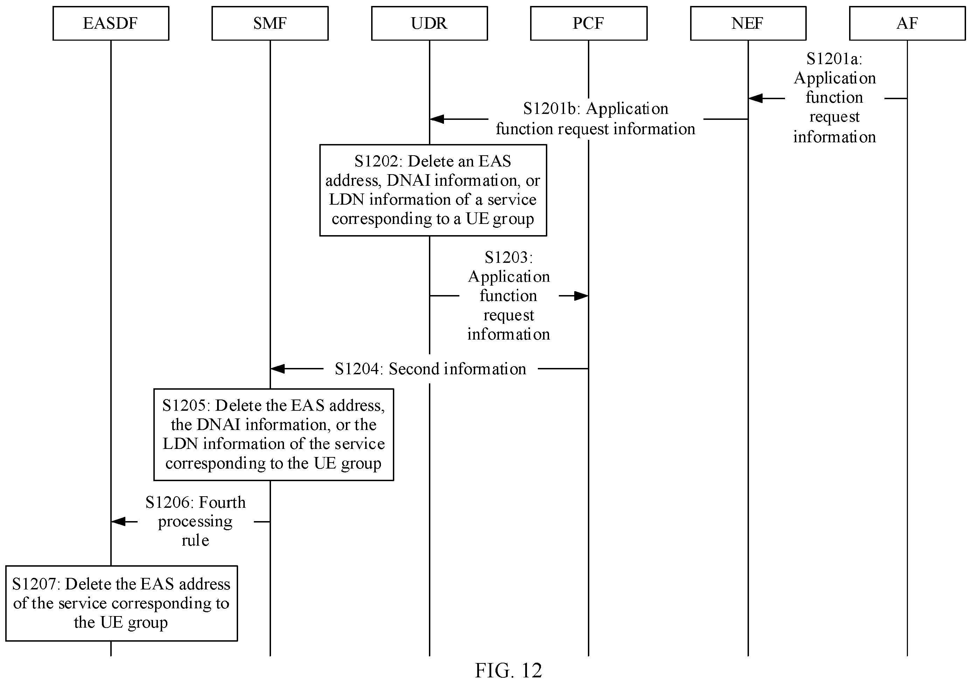

FIG. 12 is a schematic interaction diagram of a method for rediscovering an edge service not falling under the scope of the claims. After an edge service discovery process corresponding to the UE group is completed in the methods described in FIG. 4 to FIG. 11C, if new UE is added to the UE group, load of a core network element exceeds a preset range of the core network element, each core network element needs to perform a rediscovery procedure. Each network element deletes the EAS address information, the DNAI information, or the LDN information that are stored in the edge service discovery process, and re-executes the edge service discovery process described in FIG. 4 to FIG. 11C.

S1201: A UDR network element receives application function request information from an AF network element.

Optionally, step S1201 may include steps S1201a and S1201b, that is, an NEF network element may forward the application function request information to the UDR network element.

Content included in the application function request information is similar to the content described in step S500, step S800, and step S1100. Details are not described herein again. The application function request information may further include third indication information, and the third indication information indicates each network element to delete the EAS address information, the DNAI information, or the LDN information stored in the edge service discovery process.

Optionally, the third indication information may be implicitly carried in the application function request information.

S1202: The UDR network element deletes the EAS address information, the DNAI information, or the LDN information of the service corresponding to the UE group.

In a possible implementation, the UDR network element stores the EAS address information, the DNAI information, or the LDN information of the service corresponding to the UE group. After receiving the application function request information from the AF network element, the UDR network element determines, based on service information, identification information, or location area information corresponding to a UE group, the UE group that needs to perform a rediscovery service and a service corresponding to the UE group, and deletes the EAS address information, the DNAI information, or the LDN information of the service corresponding to the UE group.

S1203: The UDR network element sends the application function request information to a PCF network element.

S1204: An SMF network element receives second information from the PCF network element.

The PCF network element generates the second information based on the application function request information, and sends the second information to the SMF network element.

S1205: The SMF network element deletes the EAS address information, the DNAI information, or the LDN information of the service corresponding to the UE group.

In a possible implementation, the SMF network element stores the EAS address information, the DNAI information, or the LDN information of the service corresponding to the UE group. After receiving the second information from the PCF network element, the SMF network element determines, based on the service information, the identification information, or the location area information corresponding to the UE group, the UE group that needs to perform the rediscovery service and the service corresponding to the UE group, and deletes the EAS address information, the DNAI information, or the LDN information of the service corresponding to the UE group.

S1206: The SMF network element sends a fourth processing rule to an EASDF network element.

The fourth processing rule includes an FQDN of the service corresponding to the UE group and a processing rule. The FQDN is used by the EASDF network element to search for an EAS address corresponding to the FQDN. The processing rule indicates the EASDF network element to delete, when the EAS address corresponding to the UE group is determined to be stored, the EAS address corresponding to the UE group.

S1207: The EASDF network element deletes an EAS address, a DNAI, or an LDN corresponding to the UE group.

In a possible implementation, if the EASDF network element stores the EAS address of the service corresponding to the UE group, the EASDF network element searches for the corresponding EAS address based on the FQDN carried in the fourth processing rule, and deletes the EAS address according to the fourth processing rule.

After steps S1201 to S1206, each network element re-executes the edge service discovery process described in FIG. 4 to FIG. 11C, and reselects a corresponding EAS address, DNAI, or LDN for UE in the UE group that accesses a specific service.

In embodiments of this application, "first", "second", and the like are merely intended to indicate that a plurality of objects are different. For example, a first network element and a second network element are merely intended to indicate different network elements, and should impose no impact on the network elements and the quantities thereof. "First", "second", and the like described above should not impose any limitation on embodiments of this application.

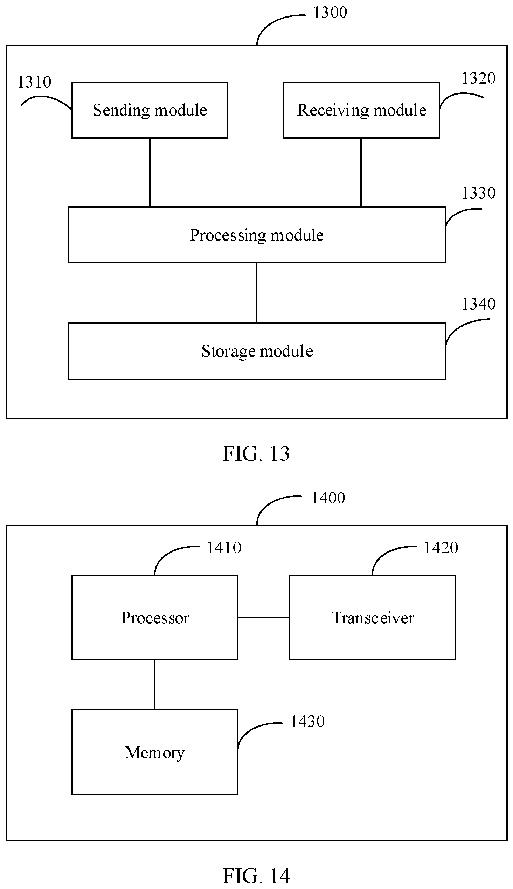

The foregoing describes in detail the method for discovering the edge service in embodiments of this application with reference to FIG. 1 to FIG. 11C. The following describes in detail communication apparatuses in embodiments of this application with reference to FIG. 13 and FIG. 14.

FIG. 13 is a block diagram of a structure of a communication apparatus according to an embodiment of this application. The communication apparatus may have a function of the first network element or the fourth network element in the foregoing method embodiments, and may be configured to perform the steps performed by the first network element or the fourth network element in the foregoing method embodiments.

In a possible implementation, the communication apparatus 1300 shown in FIG. 13 may be used as the first network element in the foregoing method embodiments, and performs the steps performed by the first network element in the foregoing method embodiments.

As shown in FIG. 13, the communication apparatus 1300 may include a sending module 1310 and a receiving module 1320.

The sending module 1310 may be configured to support the communication apparatus 1300 in sending information, for example, performing the sending actions performed by the first network element in S304, S404, S502, S507, S602, S606, S609, S702, S706, S708, S713, S715, S802, S807, S812, S902, S906, S909, S914, S1002, S1006, S1009, S1013, S1016, S1102, S1106, S1109, S1113, S1116, and S1206 in FIG. 3 to FIG. 12.

The receiving module 1320 may be configured to support the communication apparatus 1300 in receiving information, for example, performing the receiving actions performed by the first network element in S301, S302, S401, S402, S501, S504, S601, S604, S607, S701, S704, S707, S711, S714, S801, S804, S810, S901, S904, S907, S912, S1001, S1004, S1007, S1012, S1014, S1101, S1104, S1107, S1112, S1114, and S1204 in FIG. 3 to FIG. 12.

Optionally, the communication apparatus 1300 may further include a processing module 1330. The processing module 1330 is coupled to the sending module 1310 and the receiving module 1320, and may be configured to support the communication apparatus 1300 in performing the processing actions in the foregoing method embodiments, for example, performing the processing actions performed by the first network element in S303, S403, S505, S506, S605, S608, S705, S712, S805, S806, S811, S905, S908, S913, S1005, S1008, S1015, S1105, S1108, S1115, and S1205 in FIG. 3 to FIG. 12.

In another possible implementation, the communication apparatus 1300 shown in FIG. 13 may be used as the fourth network element in the foregoing method embodiments, and performs the steps performed by the fourth network element in the foregoing method embodiments.

As shown in FIG. 13, the communication apparatus 1300 may include a sending module 1310 and a receiving module 1320.

The sending module 1310 may be configured to support the communication apparatus 1300 in sending information, for example, performing the sending actions performed by the fourth network element in S301, S401, S501, S601, S701, S801, S901, S1001, S1101, and S1204 in FIG. 3 to FIG. 12.

The receiving module 1320 may be configured to support the communication apparatus 1300 in receiving information, for example, performing the receiving actions performed by the second network element in S500, S600, S700, S800, S900, S1000, S1100, and S1203 in FIG. 5A to FIG. 12.

Optionally, the communication apparatus 1300 may further include a processing module 1330. The processing module 1330 is coupled to the sending module 1310 and the receiving module 1320, and may be configured to support the communication apparatus 1300 in performing the processing actions in the foregoing method embodiment, for example, performing the processing actions performed by the fourth network element, for example, generating first information based on application function request information.

Optionally, the communication apparatus 1300 may further include a storage module 1340, configured to store program code and data of the communication apparatus 1300.

FIG. 14 is a schematic block diagram of a communication device 1400 according to an embodiment of this application. As shown in the figure, the communication device 1400 includes at least one processor 1410 and a transceiver 1420. The processor 1410 is coupled to a memory, and is configured to execute instructions stored in the memory, to control the transceiver 1420 to send a signal and/or receive a signal.

Optionally, the communication device 1400 further includes the memory 1430, configured to store the instructions.

In some embodiments, the processor 1410 and the memory 1430 may be integrated into one processing apparatus. The processor 1410 is configured to execute program code stored in the memory 1430, to implement the foregoing functions. During specific implementation, the memory 1430 may also be integrated into the processor 1410, or may be independent of the processor 1410.

In some embodiments, the transceiver 1420 may include a receiver (or referred to as a receiver machine) and a transmitter (or referred to as a transmitter machine).

The transceiver 1420 may further include an antenna. There may be one or more antennas. The transceiver 1420 may be a communication interface or an interface circuit.

When the communication device 1400 is a chip, the chip includes a transceiver unit and a processing unit. The transceiver unit may be an input/output circuit or a communication interface. The processing unit may be a processor, a microprocessor, or an integrated circuit that is integrated on the chip.

When the communication apparatus is a chip on a network device, the chip in the network device implements the function of the network device in the foregoing method embodiments. The chip on the network device receives information from another module (for example, a radio frequency module or an antenna) in the network device, where the information is sent by a terminal or another network device to the network device; or the chip on network device outputs information to another module (for example, a radio frequency module or an antenna) in the network device, where the information is sent by the network device to a terminal or another network device.

An embodiment of this application further provides a computer-readable storage medium. The computer-readable storage medium stores a computer program or instructions, and the computer program or the instructions are executed by a computer (for example, a processor), to implement some or all of the steps in any method performed by any apparatus in embodiments of this application.

An embodiment of this application further provides a computer program product including instructions. When the computer program product runs on a computer, some or all of the steps in any method performed by any apparatus in embodiments of this application are performed.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

## Claims

1. A method for discovering an edge service, comprising:
receiving (S401), by a session management function network element, first information from a policy control function network element, wherein the first information comprises first service information;
receiving (S402), by the session management function network element, second information from an edge application server discovery function network element, wherein the second information comprises first domain name information, the first domain name information is comprised in first DNS query request information from a first terminal device, and the first DNS query request information is used to request application server address information corresponding to the first domain name information;
when the first service information comprises the first domain name information, determining (S403), by the session management function network element for the first terminal device, a data network access identifier that is the same as that of a second terminal device, wherein the second terminal device and the first terminal device access a same service;
determining, by the session management function network element, second option information based on the data network access identifier; and
sending (S404), by the session management function network element, a third rule to the edge application server discovery function network element, wherein the third rule comprises the second option information, and the second option information is used by a DNS server to determine application server address information,
wherein the first information comprises third identification information and second indication information,
wherein the third identification information is an identification of a terminal group, and the second terminal device and the first terminal device belong to the terminal group;
wherein the second indication information indicates to determine an application server associated with a same data network access identifier for terminal devices accessing a same service;
wherein the determining (S403), by the session management function network element for the first terminal device, a data network access identifier that is the same as that of a second terminal device comprises:
determining, by the session management function network element for the first terminal device based on the third identification information and the second indication information, the data network access identifier that is the same as that of the second terminal device.

2. The method according to claim 1, wherein the first information comprises location area information, and the location area information is used to determine an application server associated with a same data network access identifier for terminal devices that belong to an indicated location area and access a same service.

3. A method for discovering an edge service, comprising:
receiving, by a policy control function network element, application function request information from an application function network element, wherein the application function request information is used to control routing of a service traffic;
generating, by the policy control function network element, first information based on the application function request information, wherein the first information comprises first service information, and the first information is used to determine a same data network access identifier for terminal devices in a terminal group;
sending, by the policy control function network element, the first information to a session management function network element;
wherein the method further comprises: the method according to claim 1 or 2.

4. The method according to claim 3, wherein the application function request information comprises one or more of the following: the first service information, the second indication information, the third identification information, or the location area information.

5. The method according to claims 3 or 4, further comprising:
sending, by the application function network element, the application function request information to the policy control function network element.

6. A system for discovering an edge service, comprising a session management function network element, and a policy control function network element network element,
wherein the policy control function network element is configured to:
receive application function request information from an application function network element, wherein the application function request information is used to control routing of a service traffic;
generate first information based on the application function request information, wherein the first information comprises first service information, and the first information is used to determine a same data network access identifier for terminal devices in a terminal group;
send the first information to a session management function network element; and
wherein the session management functiont network element is configured to perform the method according to claim 1 or 2.

7. The system according to claim 6, wherein the system further comprises an application function network element, the application function network element is configured to send application function request information to the application function network element, and the application function request information is used to control routing of a service traffic.

8. An apparatus for discovering an edge service, comprising a module or a unit configured to perform the method according to claim 1 or 2.

9. A computer-readable storage medium, comprising a computer program, wherein when the computer program is run on a computer, the computer is enabled to perform the method according to claim 1 or 2.

10. A computer program product comprising a computer program or a group of instructions, and when the computer program or the group of instructions is run by on computer, the computer is enabled to perform the method according to claim 1 or 2.

## Patentansprüche

1. Verfahren zum Entdecken eines Edge-Dienstes, umfassend:
Empfangen (S401) von ersten Informationen von einem Richtliniensteuerfunktions-Netzelement durch ein Sitzungsverwaltungsfunktions-Netzelement, wobei die ersten Informationen erste Dienstinformationen umfassen;
Empfangen (S402) von zweiten Informationen von einem Edge-Anwendungsserverentdeckungsfunktions-Netzelement, wobei die zweiten Informationen erste Domänennameninformationen umfassen, die ersten Domänennameninformationen in ersten DNS-Anfrageanforderungsinformationen von einem ersten Endgerät enthalten sind und die ersten DNS-Anfrageanforderungsinformationen verwendet werden, um den ersten Domänennameninformationen entsprechende Anwendungsserver-Adresseninformationen anzufordern;
wenn die ersten Dienstinformationen die ersten Domänennameninformationen umfassen, Bestimmen (S403) einer Datennetzwerk-Zugangskennung für das erste Endgerät, die dieselbe wie die eines zweiten Endgeräts ist, durch das Sitzungsverwaltungsfunktions-Netzelement, wobei das zweite Endgerät und das erste Endgerät auf einen selben Dienst zugreifen;
Bestimmen von zweiten Optionsinformationen durch das Sitzungsverwaltungsfunktions-Netzelement auf der Basis der Datennetzwerk-Zugangskennung; und
Senden (S404) einer dritten Regel zu dem Edge-Anwendungsserver-Entdeckungsfunktions-Netzelement durch das Sitzungsverwaltungsfunktions-Netzelement, wobei die dritte Regel die zweiten Optionsinformationen umfasst und die zweiten Optionsformationen durch einen DNS-Server verwendet werden, um Anwendungsserver-Adresseninformationen zu bestimmen,
wobei die ersten Informationen dritte Identifikationsinformationen und zweite Identifikationsinformationen umfassen,
wobei die dritten Identifikationsinformationen eine Identifikation einer Endgerätegruppe sind und das zweite Endgerät und das erste Endgerät zu der Endgerätegruppe gehören;
wobei die zweiten Angabeinformationen angeben, einen Anwendungsserver zu bestimmen, der einer selben Datennetzwerk-Zugangskennung für Endgeräte, die auf einen selben Dienst zugreifen, zugeordnet ist;
wobei das Bestimmen (S403) einer Datennetzwerk-Zugangskennung für das erste Endgerät, die dieselbe wie die eines zweiten Endgeräts ist, durch das Sitzungsverwaltungsfunktions-Netzelement Folgendes umfasst:
Bestimmen der Datennetzwerk-Zugangskennung für das erste Endgerät, die dieselbe wie die eines zweiten Endgeräts ist, durch das Sitzungsverwaltungsfunktions-Netzelement auf der Basis der dritten Identifikationsinformationen und der zweiten Angabeinformationen.

2. Verfahren nach Anspruch 1, wobei die ersten Informationen Ortsgebietsinformationen umfassen und die Ortsgebietsinformationen verwendet werden, um einen Anwendungsserver zu bestimmen, der einer selben Datennetzwerk-Zugangskennung für Endgeräte, die zu einem angegebenen Ortsgebiet gehören und auf einen selben Dienst zugreifen, zugeordnet ist.

3. Verfahren zum Entdecken eines Edge-Dienstes, umfassend:
Empfangen von Anwendungsfunktions-Anforderungsinformationen von einem Anwendungsfunktions-Netzelement durch ein Richtliniensteuerfunktions-Netzelement, wobei die Anwendungsfunktions-Anforderungsinformationen verwendet werden, um Routing eines Dienstverkehrs zu steuern;
Erzeugen von ersten Informationen durch das Richtliniensteuerfunktions-Netzelement auf der Basis der Anwendungsfunktions-Anforderungsinformationen, wobei die ersten Informationen erste Dienstinformationen umfassen und die ersten Informationen verwendet werden, um eine selbe Datennetzwerk-Zugangskennung für Endgeräte in einer Endgerätegruppe zu bestimmen;
Senden der ersten Informationen zu einem Sitzungsverwaltungsfunktions-Netzelement durch das Richtliniensteuerfunktions-Netzelement;
wobei das Verfahren ferner Folgendes umfasst: das Verfahren nach Anspruch 1 oder 2.

4. Verfahren nach Anspruch 3, wobei die Anwendungsfunktions-Anforderungsinformationen die ersten Dienstinformationen und/oder die zweiten Angabeinformationen und/oder die dritten Identifikationsinformationen und/oder die Ortsgebietsinformationen umfassen.

5. Verfahren nach Anspruch 3 oder 4, ferner umfassend:
Senden der Anwendungsfunktions-Anforderungsinformationen zu dem Richtliniensteuerfunktions-Netzelement durch das Anwendungsfunktions-Netzelement.

6. System zum Entdecken eines Edge-Dienstes, das einen Sitzungsverwaltungsfunktions-Netzelement und ein Richtliniensteuerfunktions-Netzelement umfasst, wobei das Richtliniensteuerfunktions-Netzelement ausgelegt ist zum
Empfangen von Anwendungsfunktions-Anforderungsinformationen von einem Anwendungsfunktions-Netzelement, wobei die Anwendungsfunktions-Anforderungsinformationen verwendet werden, um Routing eines Dienstverkehrs zu steuern;
Erzeugen von ersten Informationen auf der Basis der Anwendungsfunktions-Anforderungsinformationen, wobei die ersten Informationen erste Dienstinformationen umfassen und die ersten Informationen verwendet werden, um eine selbe Datennetzwerk-Zugangskennung für Endgeräte in einer Endgerätegruppe zu bestimmen;
Senden der ersten Informationen zu einem Sitzungsverwaltungsfunktions-Netzelement; und
wobei das Sitzungsverwaltungsfunktions-Netzelement dafür ausgelegt ist, das Verfahren nach Anspruch 1 oder 2 auszuführen.

7. System nach Anspruch 6, wobei das System ferner ein Anwendungsfunktions-Netzelement umfasst, dass Anwendungsfunktions-Netzelement ausgelegt ist zum Senden von Anwendungsfunktions-Anforderungsinformationen zu dem Anwendungsfunktions-Netzelement und die Anwendungsfunktions-Anforderungsinformationen verwendet werden, um Routing eines Dienstverkehrs zu steuern.

8. Vorrichtung zum Entdecken eines Edge-Dienstes, die ein Modul oder eine Einheit umfasst, das bzw. die dafür ausgelegt ist, das Verfahren nach Anspruch 1 oder 2 auszuführen.

9. Computerlesbares Speicherungsmedium, das ein Computerprogramm umfasst, wobei, wenn das Computerprogramm auf einem Computer laufen gelassen wird, der Computer dazu befähigt wird, das Verfahren nach Anspruch 1 oder 2 auszuführen.

10. Computerprogrammprodukt, das ein Computerprogramm oder eine Gruppe von Anweisungen umfasst, wobei, wenn das Computerprogramm oder die Gruppe von Anweisungen durch einen Computer ausgeführt werden, der Computer dazu befähigt wird, das Verfahren nach Anspruch 1 oder 2 auszuführen.

## Revendications

1. Procédé de découverte d'un service de périphérie, comprenant :
la réception (S401), par un élément de réseau à fonction de gestion de session, de premières informations en provenance d'un élément de réseau à fonction de commande de politique, dans lequel les premières informations comprennent des premières informations de service ;
la réception (S402), par l'élément de réseau à fonction de gestion de session, de deuxièmes informations en provenance d'un élément de réseau à fonction de découverte de serveur d'application de périphérie, dans lequel les deuxièmes informations comprennent des premières informations de nom de domaine, les premières informations de nom de domaine sont comprises dans des premières informations de demande d'interrogation de DNS provenant d'un premier dispositif terminal, et les premières informations de demande d'interrogation de DNS servent à demander des informations d'adresse de serveur d'application correspondant aux premières informations de nom de domaine ;
lorsque les premières informations de service comprennent les premières informations de nom de domaine, la détermination (S403), par l'élément de réseau à fonction de gestion de session pour le premier dispositif terminal, d'un identifiant d'accès à un réseau de données identique à celui d'un second dispositif terminal, dans lequel le second dispositif terminal et le premier dispositif terminal accèdent à un même service ;
la détermination, par l'élément de réseau à fonction de gestion de session, de deuxièmes informations d'option sur la base de l'identifiant d'accès à un réseau de données ; et
l'envoi (S404), par l'élément de réseau à fonction de gestion de session, d'une troisième règle à l'élément de réseau à fonction de découverte de serveur d'application de périphérie, dans lequel la troisième règle comprend les deuxièmes informations d'option, et les deuxièmes informations d'option sont utilisées par un serveur DNS pour déterminer des informations d'adresse de serveur d'application,
dans lequel les premières informations comprennent des troisièmes informations d'identification et des deuxièmes informations d'indication,
dans lequel les troisièmes informations d'identification sont une identification d'un groupe de terminaux, et le second dispositif terminal ainsi que le premier dispositif terminal appartiennent au groupe de terminaux ;
dans lequel les deuxièmes informations d'indication indiquent de déterminer un serveur d'application associé à un même identifiant d'accès à un réseau de données pour des dispositifs terminaux accédant à un même service ;
dans lequel la détermination (S403), par l'élément de réseau à fonction de gestion de session pour le premier dispositif terminal, d'un identifiant d'accès à un réseau de données identique à celui d'un second dispositif terminal comprend :
la détermination, par l'élément de réseau à fonction de gestion de session pour le premier dispositif terminal sur la base des troisièmes informations d'identification et des deuxièmes informations d'indication, de l'identifiant d'accès à un réseau de données identique à celui du second dispositif terminal.

2. Procédé selon la revendication 1, dans lequel les premières informations comprennent des informations de zone de localisation, et les informations de zone de localisation sont utilisées pour déterminer un serveur d'application associé à un même identifiant d'accès à un réseau de données pour des dispositifs terminaux qui appartiennent à une zone de localisation indiquée et accèdent à un même service.

3. Procédé de découverte d'un service de périphérie, comprenant :
la réception, par un élément de réseau à fonction de commande de politique, d'informations de demande de fonction d'application en provenance d'un élément de réseau à fonction d'application, dans lequel les informations de demande de fonction d'application servent à commander le routage d'un trafic de service ;
la génération, par l'élément de réseau à fonction de commande de politique, de premières informations sur la base des informations de demande de fonction d'application, dans lequel les premières informations comprennent des premières informations de service, et les premières informations servent à déterminer un même identifiant d'accès à un réseau de données pour des dispositifs terminaux dans un groupe de terminaux ;
l'envoi, par l'élément de réseau à fonction de commande de politique, des premières informations à un élément de réseau à fonction de gestion de session ;
le procédé comprenant en outre : le procédé selon la revendication 1 ou 2.

4. Procédé selon la revendication 3, dans lequel les informations de demande de fonction d'application comprennent une ou plusieurs des informations suivantes : les premières informations de service, les deuxièmes informations d'indication, les troisièmes informations d'identification ou les informations de zone de localisation.

5. Procédé selon les revendications 3 ou 4, comprenant en outre :
l'envoi, par l'élément de réseau à fonction d'application, des informations de demande de fonction d'application à l'élément de réseau à fonction de commande de politique.

6. Système de découverte d'un service de périphérie, comprenant un élément de réseau à fonction de gestion de session, et un élément de réseau à fonction de commande de politique,
dans lequel l'élément de réseau à fonction de commande de politique est configuré pour :
recevoir des informations de demande de fonction d'application à partir d'un élément de réseau à fonction d'application, dans lequel les informations de demande de fonction d'application servent à commander le routage d'un trafic de service ;
générer des premières informations sur la base des informations de demande de fonction d'application, dans lequel les premières informations comprennent des premières informations de service, et les premières informations servent à déterminer un même identifiant d'accès à un réseau de données pour des dispositifs terminaux dans un groupe de terminaux ;
envoyer les premières informations à un élément de réseau à fonction de gestion de session ; et
dans lequel l'élément de réseau à fonction de gestion de session est configuré pour réaliser le procédé selon la revendication 1 ou 2.

7. Système selon la revendication 6, le système comprenant en outre un élément de réseau à fonction d'application, l'élément de réseau à fonction d'application est configuré pour envoyer des informations de demande de fonction d'application à l'élément de réseau à fonction d'application, et les informations de demande de fonction d'application servent à commander le routage d'un trafic de service.

8. Appareil de découverte d'un service de périphérie, comprenant un module ou une unité configuré pour réaliser le procédé selon la revendication 1 ou 2.

9. Support de stockage lisible par ordinateur, comprenant un programme informatique, dans lequel, lorsque le programme informatique est exécuté sur un ordinateur, ce dernier est en mesure de réaliser le procédé selon la revendication 1 ou 2.

10. Produit de programme informatique comprenant un programme informatique ou un groupe d'instructions, et lorsque le programme informatique ou le groupe d'instructions est exécuté sur un ordinateur, ce dernier est en mesure de réaliser le procédé selon la revendication 1 ou 2.
